(19) Europäisches Patentamt
European Patent Office
Office européen des brevets

(11) EP 2 945 156 A1

(12) # EUROPEAN PATENT APPLICATION

(43) Date of publication:
**18.11.2015 Bulletin 2015/47**

(51) Int Cl.:
***G10L 15/24*** *(2013.01)*

(21) Application number: **15167396.9**

(22) Date of filing: **12.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.05.2014 KR 20140058014**

(71) Applicant: **Samsung Electronics Co., Ltd**
**Gyeonggi-do 443-742 (KR)**

(72) Inventors:
- **Lukasiak, Bozena**
  **443-742 Gyeonggi-do (KR)**
- **Gajewska-Dendek, Elzbieta**
  **443-742 Gyeonggi-do (KR)**
- **Tkaczuk, Jakub**
  **443-742 Gyeonggi-do (KR)**
- **Bronakowski, Lukasz**
  **443-742 Gyeonggi-do (KR)**

(74) Representative: **Jenkins, Richard Gavin**
**HGF Limited**
**Saviour House**
**9 St Saviourgate**
**York YO1 8NQ (GB)**

(54) **AUDIO SIGNAL RECOGNITION METHOD AND ELECTRONIC DEVICE SUPPORTING THE SAME**

(57) An electronic device is provided. The electronic device includes a signal acquisition module configured to transmit a signal toward an object and receive an echo signal obtained by transformation of the signal through a collision with one surface of the object; a feature extraction module configured to extract a signal descriptor from the echo signal and analyze the extracted signal descriptor; a conversion module configured to convert the signal descriptor into an audio descriptor; and a synthesis module configured to convert the audio descriptor into an audio signal in a determined frequency band and output the converted audio signal.

FIG. 1

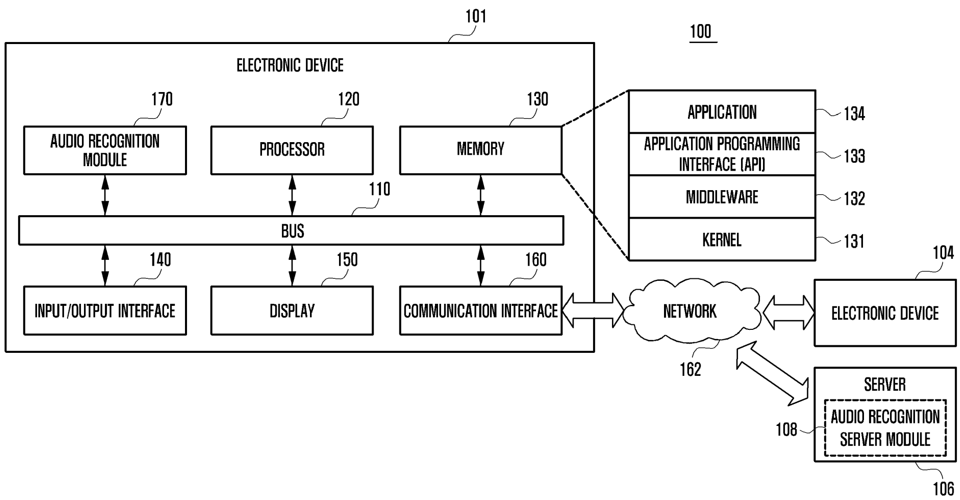


EP 2 945 156 A1

## Description

## BACKGROUND

### 1. Field of the Invention

The present invention relates generally to an audio signal recognition method and an electronic device supporting the same and, moreparticularly, to a method of recognizing an audio signal of an object using an echo signal obtained by transformation of a signal through a collision with the object generating audio, and an electronic device supporting the same.

### 2. Description of the Related Art

In recent years, in order to recognize external audio signals, technologies have been developed for recognizing audio signals using various types of microphones mounted to electronic devices. Words and syllables for audio signals input externally can be recognized through microphones mounted to electronic devices, and the recognized results can be stored in the electronic devices.

In addition, the electronic devices can analyze voices received externally and determine an appropriate reply, corresponding to the received voices, from a database previously stored therein to output the determined reply through a speaker using voice recognition applications included therein.

Furthermore, a Silent Speech Interface (SSI) may be mounted to electronic devices to acquire a user's voice even when the user cannot speak in a loud voice, or when noise caused by a surrounding environment is loud.

However, when electronic devices recognize a user's voice using microphones mounted thereto, the electronic devices cannot accurately recognize the user's voice in cases where the user is at a remote place or cannot speak in a loud voice.

When electronic devices having the Silent Speech Interface (SSI) mounted thereto recognize external audio, the electronic devices acquire a user's motion (e.g., a change in the shape of the user's lips) using a camera mounted thereto. Then, the electronic devices recognize the user's speech by determining the acquired motion of the user, for example, the change in the shape of the user's lips. However, since motions of the lips for words having different phonemes are the same as or similar to each other, the reliability of audio outputs corresponding to a user's motions is deteriorated.

In the related art, a user must input a particular condition at a specific time to search for desired information through search engines or portal sites, and therefore it may be difficult for the user to rapidly and accurately discover required information in real time. In addition, in cases where a user executes a particular application program through an electronic device, a keyword and information that the user wants to discover may be contained in a region that is not displayed on a display of the electronic device among the entire display region of the application program, and therefore it may be difficult for the user to recognize the keyword and information. Accordingly, in an electronic device for providing information, a method and device is required for effectively transferring and displaying desired information to a user.

## SUMMARY

The present disclosure has been made to address the above-mentioned problems and disadvantages, and to provide at least the advantages described below. Accordingly, an aspect of the present invention provides an audio signal recognition method and an electronic device for supporting the same.

In accordance with an aspect of the present disclosure, an electronic device is provided. The electronic device includes a signal acquisition module configured to transmit a signal toward an object and receive an echo signal obtained by transformation of the signal through a collision with one surface of the object; a feature extraction module configured to extract a signal descriptor from the echo signal and analyze the extracted signal descriptor; a conversion module configured to convert the signal descriptor into an audio descriptor; and a synthesis module configured to convert the audio descriptor into an audio signal in a determined frequency band and output the converted audio signal.

In accordance with another aspect of the present disclosure, an audio recognition method for an electronic device is provided. The method includes transmitting a signal toward an object; receiving an echo signal obtained by transformation of the signal through a collision with one surface of the object; extracting a signal descriptor from the echo signal and analyzing the extracted signal descriptor; converting the signal descriptor into an audio descriptor; and converting the audio descriptor into an audio signal in a determined frequency band and outputting the converted audio signal.

## BRIEF DESCRIPTION OF THE DRAWINGS

The above and other aspects, features and advantages of the present invention will be more apparent from the following detailed description, taken in conjunction with the accompanying drawings, in which:

FIG. 1 is a block diagram of a network environment including an electronic device according to an embodiment of the presentinvention;
FIG. 2 is a block diagram of an audio recognition module of an electronic device according to an embodiment of the present invention;
FIG. 3 is a block diagram of an audio recognition module of an electronic device according to an embodiment of the present invention;
FIG. 4 is a block diagram of a feature extraction module of an electronic device according to an embodiment of the present invention;
FIGS. 5 to 7 are flowcharts of audio recognition methods of an electronic device according to an embodiment of the present invention;
FIG. 8 is a block diagram of an electronic device according to an embodiment of the present invention; and
FIG. 9 illustrates a protocol exchange between electronic devices according to an embodiment of the present invention.

## DETAILED DESCRIPTION OF EMBODIMENTS OF THE PRESENT INVENTION

Various embodiments of the present invention provide a method and device for providing information by an electronic device through which a user can receive desired information in real time according to a preset search condition. In addition, various embodiments of the present invention provide a method and device for providing information in which a user can recognize, at a glance, a keyword and related information that the user wants to view, where movement can be immediately made to the corresponding keyword and the related information.

Hereinafter, embodiments of the present invention will be described with reference to the accompanying drawings. The present invention may have various modifications and embodiments and thus will be described in detail with reference to certain embodiments illustrated in the drawings. However, it should be understood that there is no intent to limit the present invention to the particular forms disclosed herein; rather, the present invention should be construed to cover all modifications, equivalents, and/or alternatives falling within the scope and spirit of the invention. In the description of the drawings, identical or similar reference numerals are used to designate identical or similar elements.

As used herein, the expressions "include" or "may include" refer to the existence of a corresponding function, operation, or element, and do not exclude one or more additional functions, operations, or elements. Also, as used herein, the terms "include" and/or "have" should be construed to denote a certain feature, number, step, operation, element, component or a combination thereof, and should not be construed to exclude the existence or possible addition of one or more other features, numbers, steps, operations, elements, components, or combinations thereof.

Also, as used here, the expression "or" includes any or all combinations of words enumerated together. For example, the expression "A or B" may include A, B, or both A and B.

In the present disclosure, the expressions "a first," "a second," "the first," "the second," and the like may modify various elements, but the corresponding elements are not limited by these expressions. For example, the above expressions do not limit the sequence and/or importance of the corresponding elements. The above expressions may be used merely for the purpose of distinguishing one element from another elements. For example, a first user device and a second user device indicate different user devices although both of them are user devices. For example, a first element may be referred to as a second element, and similarly, a second element may be referred to as a first element without departing from the scope and spirit of the present invention.

The terms used in the present disclosure are only used to describe certain embodiments, and are not intended to limit the present invention. As used herein, singular forms are intended to include plural forms as well, unless the context clearly indicates otherwise.

Unless defined otherwise, all terms used herein, including technical and scientific terms, have the same meaning as those commonly understood by a person of ordinary skill in the art to which the present invention pertains. Such terms as those defined in a generally used dictionary are to be interpreted to have the same meanings as the contextual meanings in the relevant field of the art, and are not to be interpreted to have ideal or excessively formal meanings unless clearly defined in the present disclosure.

An electronic device according to the present invention may be a device that is configured to provide a user with information. For example, the electronic device may be a combination of one or more of a smartphone, a tablet personal computer, a mobile phone, a video phone, an e-book reader, a desktop personal computer, a laptop personal computer, a netbook computer, a Personal Digital Assistant (PDA), a Portable Multimedia Player (PMP), a Moving Picture Experts Group Audio Layer 3 (MP3) player, a mobile medical device, an electronic bracelet, an electronic necklace, an electronic appcessory, a camera, a wearable device, an electronic clock, a wrist watch, a home appliance (e.g. a refrigerator, an air conditioner, a cleaner, an oven, a microwave oven, a washing machine, a vacuum cleaner, etc.), an artificial intelligent robot, a Television (TV), a Digital Video Disk (DVD) player, an audio player, various medical machines (e.g. a Magnetic Resonance Angiography (MRA), a Magnetic Resonance Imaging (MRI) machine, a Computed Tomography (CT) machine, a tomography camera, a sonography device, etc.), a navigation device, a Global Positioning System (GPS) receiver, an Event Data Recorder (EDR), a Flight Data Recorder (FDR), a set-top box, a TV box (e.g. Samsung HomeSync™, Apple TV™, or Google TV™), an electronic dictionary, a vehicle infotainment device, electronic equipment for a ship (e.g. navigation equipment for a ship, a gyrocompass, etc.), avionics equipment, a security device, an electronic cloth, an electronic key, a camcorder, a game console, a Head-Mounted Display (HMD), a flat panel display device, an electronic frame, an electronic album, a furniture or a part of a building/structure including a communication function, an electronic board, an electronic signature receiving device, a projector, etc. It is obvious to those skilled in the art that the electronic device according to the present invention is not limited to the aforementioned devices.

FIG. 1 is a block diagram of a network environment 100 including an electronic device 101 according to an embodiment of the present invention.

Referring to FIG. 1, the electronic device 101 includes a bus 110, a processor 120, a memory 130, an input/output interface 140, a display 150, a communication interface 160, and an audio recognition module 170.

The bus 110 is a circuit that connects the aforementioned elements and transfers communication (for example, a control message) between the aforementioned elements.

The processor 120 receives instructions from the aforementioned other elements (for example, the memory 130, the input/output interface 140, the display 150, the communication interface 160, and the audio recognition module 170) through the bus 110 and decodes the received instructions to perform a calculation or process data according to the decoded instructions.

The memory 130 stores instructions or data received from or generated by the processor 120 or the other elements (for example, the input/output interface 140, the display 150, the communication interface 160, and the audio recognition module 170). The memory 130 includes programming modules, such as a kernel 131, middleware 132, an Application Programming Interface (API) 133, and an application 134. Each of the programming modules described above may be implemented by software, firmware, and hardware, or a combination of at least two thereof.

The kernel 131 controls or manages system resources (for example, the bus 110, the processor 120, and the memory 130) which are used to execute an operation or a function implemented in the remaining other programming modules, for example, the middleware 132, the API 133, and the application 134. In addition, the kernel 131 provides an interface that enables the middleware 132, the API 133, or the application 134 to access individual elements of the electronic device 101 for control or management thereof.

The middleware 132 functions as a relay for allowing the API 133 or the applications 134 to exchange data by communicating with the kernel 131. Furthermore, in regard to task requests received from the application 134, the middleware 132 may perform a control function (for example, scheduling or load balancing) for the task requests, by using a method of assigning, to at least one of the application 134, a priority for using the system resources (for example, the bus 110, the processor 120, and the memory 130) of the electronic device 101.

The API 133 is an interface through which the application 134 controls functions provided by the kernel 131 and the middleware 132, and may include at least one interface or function (for example, instruction) for file control, window control, image processing, or text control.

According to an embodiment of the present invention, the application 134 may include a Short Message Service (SMS)/Multimedia Message Service (MMS) application, an e-mail application, a calendar application, an alarm application, a health care application (for example, an application for measuring an amount of exercise or a blood sugar level), and an environmental information application (for example, an application for providing a measurement of atmospheric pressure, humidity, temperature, and the like). Additionally or alternately, the application 134 may include an application related to an information exchange between the electronic device 101 and an external electronic device 104. The application related to the information exchange may include, for example, a notification relay application for transferring certain information to the external electronic device, or a device management application for managing the external electronic device 104.

For example, the notification relay application may include a function for transferring, to the external electronic device 104, notification information generated from other applications of the electronic device 101 (for example, an SMS/MMS application, an e-mail application, a health management application, an environmental information application, and the like). Additionally or alternatively, the notification relay application may receive the notification information from, for example, the external electronic device 104 and provide the received notification information to a user. The device management application may manage (for example, install, delete, or update), for example, at least some functions of the external electronic device 104 communicating with the electronic device 101 (for example, turning on/off the external electronic device 104 itself (or some elements thereof) or adjusting brightness (or resolution) of a display), applications operating in the external electronic device 104, or services provided from the external electronic device 104 (for example, a telephone call service or a message service).

According to an embodiment of the present invention, the application 134 includes an application designated depending on an attribute (for example, a type) of the external electronic device 104. For example, in a case where the external electronic device 104 is an MP3 player, the application 134 includes an application related to the reproduction of music. Similarly, in a case where the external electronic device 104 is a mobile medical appliance, the application 134 includes an application related to health care. According to an embodiment of the present invention, the application 134 includes at least one of an application designated to the electronic device 101 and an application received from the external electronic device (for example, a server 106 or the electronic device 104).

The input/output interface 140 transfers instructions or data, input from a user through an input/output device (for example, a sensor, a keyboard, or a touch screen), to the processor 120, the memory 130, the communication interface 160, or the audio recognition module 170 through, for example, the bus 110. For example, the input/output interface 140 provides, to the processor 120, data of a user's touch input through the touch screen. Furthermore, through the input/output device (for example, a speaker or a display), the input/output interface 140 outputs instructions or data received from the processor 120, the memory 130, the communication interface 160, or the audio recognition module 170 through the bus 110. For example, the input/output interface 140 may output voice data, processed through the processor 120, to a user through a speaker.

The display 150 displays various types of information (for example, multimedia data or text data) to a user.

The communication interface 160 establishes communication between the electronic device 101 and an external electronic device (for example, the electronic device 104 or the server 106). For example, the communication interface 160 may be connected to a network 162 through wireless or wired communication to communicate with an external device. The wireless communication includes at least one of, for example, Wireless Fidelity (Wi-Fi), Bluetooth (BT), Near Field Communication (NFC), Global Positioning System (GPS) and cellular communication (for example, Long Term Evolution (LTE), LTE Advanced (LTE-A), Code Division Multiple Access (CDMA), Wideband CDMA (WCDMA), Universal Mobile Telecommunication System (UMTS), Wireless Broadband (WiBro), Global System for Mobile communication (GSM), and the like. The wired communication may include at least one of, for example, a Universal Serial Bus (USB), a High Definition Multimedia Interface (HDMI), Recommended Standard 232 (RS-232), or a Plain Old Telephone Service (POTS).

According to an embodiment of the present invention, the network 162 is a telecommunication network. The communication network may include at least one of a computer network, the Internet, the Internet of Things, or a telephone network. According to an embodiment of the present invention, a protocol (for example, a transport layer protocol, a data link layer protocol, or a physical layer protocol) for communication between the electronic device 101 and an external device may be supported by at least one of the application 134, the application programming interface 133, the middleware 132, the kernel 131, or the communication interface 160.

According to an embodiment of the present invention, the server 106 supports the driving of the electronic device 101 by performing at least one of the operations (or functions) implemented in the electronic device 101. For example, the server 106 may include an audio recognition server module 108 that can support the audio recognition module 170 implemented in the electronic device 101. For example, the audio recognition server module 108 may include at least one element of the audio recognition module 170 to perform at least one of the operations performed by the audio recognition module 170 (e.g., execute at least one operation on behalf of the audio recognition module 170).

The audio recognition module 170 transmits a signal (e.g., an ultrasonic signal) toward an object that wants to receive an audio signal. The audio recognition module 170 receives an echo signal obtained by transformation of the signal through a collision with one surface of the object. The audio recognition module 170 extracts audio features included in the received echo signal and converts the echo signal into an audio signal based on the extracted audio features. The audio recognition module 170 outputs the converted audio signal. According to an embodiment of the present invention, the audio recognition module 170 combines a Doppler frequency shift effect intensity and a fractal dimension of the ultrasonic signal to convert the echo signal into an audio signal.

The audio recognition module 170 processes at least some pieces of information acquired from the other elements (e.g., the processor 120, the memory 130, the input/output interface 140, and the communication interface 160) and provides the processed information to a user through various methods. For example, using the processor 120 or independently of the processor 120, the audio recognition module 170 controls at least some functions of the electronic device 101 such that the electronic device 101 works with another electronic device (e.g., the electronic device 104 or the server 106). According to an embodiment of the present invention, at least one element of the audio recognition module 170 may be included in the server 106 (e.g., the audio recognition server module 108), and at least one operation implemented in the audio recognition module 170 may be supported by the server 106. Additional information on the audio recognition module 170 is provided below with reference to FIGS. 2 to 7.

FIG. 2 is a block diagram 200 of an audio recognition module 170 of the electronic device 101 according to various embodiments of the present invention.

According to an embodiment of the present invention, the audio recognition module 170 includes a signal acquisition module 210, a feature extraction module 220, a compensation module 230, a conversion module 240, and a synthesis module 250.

According to an embodiment of the present invention, the signal acquisition module 210 includes a signal transmission unit 211 that can transmit a signal and a signal reception unit 213 that can receive a signal. According to an embodiment of the present invention, the signal acquisition module 210 includes an ultrasonic transducer that can generate an ultrasonic signal, and transmit an ultrasonic signal toward a designated object. In this case, the designated object may be selected by detecting a selection input event for video information displayed on a display 150. According to an embodiment of the present invention, a sensor (e.g., an ultrasonic transducer) included in the signal acquisition module 210 generates a directional signal having a beam width of about 60°.

The ultrasonic transducer is a transducer that converts electrical energy into acoustic energy. The ultrasonic transducer may be constituted by a semiconductor (e.g., a resistance layer conversion element) and a piezoelectric electro-acoustic conversion element (e.g., a quartz crystal resonator). For example, an ultrasonic signal may be generated by applying a high-frequency voltage to a plate or a rod cut away from a quartz crystal in a predetermined direction and using a harmonic wave that is an odd number of times greater than a fundamental frequency (e.g. several hundred Khz to about 25 Mhz). According to an embodiment of the present invention, the waveform of the ultrasonic signal generated by the ultrasonic transducer may be a continuous wave having a predetermined flow or a pulse wave repeated according to a predetermined period for a short duration time.

According to an embodiment of the present invention, the signal transmission unit 211 of the signal acquisition module 210 transmits a signal (e.g., an ultrasonic signal) toward a predetermined object (for example, a human body (e.g., a mouth) or an acoustic source that can generate an audio signal without using an electric signal). According to an embodiment of the present invention, the signal transmission unit 211 transmits a continuous periodic sine wave signal of 40 Khz to the predetermined object.

The signal reception unit 213 of the signal acquisition module 210 receives an echo signal obtained by transformation of a signal through a collision with one surface of an object. In this case, the transformation of the signal indicates that parameters of the signal, such as a waveform, a phase, and a frequency, are changed by the collision of the signal with the object. According to an embodiment of the present invention, the audio recognition module 170 shifts the echo signal to a low frequency band for analysis of the echo signal.

According to an embodiment of the present invention, the signal acquisition module 210 is mounted to an arbitrary device wearable on a predetermined object. For example, the signal acquisition module 210 may be worn on a predetermined object (e.g., a person's head or mouth). For example, the signal acquisition module 210 may be mounted to a headphone to transmit/receive a signal.

According to an embodiment of the present invention, the signal acquisition module 210 includes a plurality of sensors for probing a signal reflected from a predetermined object (e.g., a person's face) in order to ensure a high spatial resolution. According to an embodiment of the present invention, the plurality of sensors include an ultrasonic transducer having high accuracy and a low beam width. According to an embodiment of the present invention, the plurality of sensors use beam-forming techniques. For example, the plurality of sensors may not only receive a signal but also provide an appropriate change of a wave transmitted toward the predetermined object (e.g., a person's face).

The feature extraction module 220 receives the echo signal from the signal acquisition module 210. Based on the echo signal received from the signal acquisition module 210, the feature extraction module 210 extracts audio features included in the echo signal. According to an embodiment of the present invention, the feature extraction module 220 extracts the audio features from the received signal based on frames having a predetermined duration. For example, the feature extraction module 220 divides the signal based on a predetermined reference (e.g., a time or a frequency) and overlaps data successively received according to the predetermined reference. For example, the feature extraction module 220 distinguishes between a plurality of objects that generate audio information. For example, the feature extraction module 220 distinguishes between voice information generated by a human body and audio information generated by a TV or telephone based on a predetermined reference (e.g., a frequency, camera-based object (e.g., a person's face) tracking, or spatial filtering).

According to an embodiment of the present invention, the feature extraction module 220 extracts a signal descriptor included in the echo signal and analyzes the extracted signal descriptor. In this case, the signal descriptor indicates variables in the time domain or the frequency domain where signals are configured.

For example, the signal descriptor may be calculated by frames of the respective variables in the time domain and the frequency domain. For example, a signal is basically configured with a waveform including amplitude and a predetermined frequency and may include variables for a mean value, a standard deviation, power, a Zero-Crossing Rate (ZCR), a variation, an envelope, and a differential value thereof in the time domain. According to an embodiment of the present invention, the feature extraction module 220 calculates the extracted signal descriptor (e.g., variables for a mean value, a standard deviation, power, a ZCR, a variation, an envelope, and a differential value of a signal in the time domain).

According to an embodiment of the present invention, the features calculated in the frequency domain for the signal descriptor included in the echo signal represent mobility induced by motion of the object and the Doppler effect caused by the echo signal. In this case, the Doppler effect refers to a change in frequency of a wave received by a single or multiple objects in motion. According to an embodiment of the present invention, the feature extraction module 220 calculates spectral power of the echo signal in a predetermined frequency range. For example, the spectral power may be restricted between a minimum frequency (fmin) and a maximum frequency (fmax). According to another example, the spectral power is divided into symmetric partial bands in the vicinity of the frequency (fs) of a transmitted signal (e.g., an ultrasonic signal).

According to an embodiment of the present invention, the widths of the divided partial bands are gradually increased with the distance from the frequency (fs) of the signal to the respective bands. According to an embodiment of the present invention, the calculated spectral signal descriptor may be used in a logarithm (log) operation of Mel Frequency Cepstral Coefficients (MFCC), Mel Generalized Cepstral Coefficients, or frequency power that will subsequently be converted in the conversion module 240.

In this case, "Mel" of Mel Cepstral Coefficients (MFCC) may be a unit for representing a nonlinear frequency characteristic of a signal output by a human body. MFCC may be calculated by performing Fourier transform of an echo signal, obtaining the power of a spectrum divided by a pre-designated Mel scale, obtaining log values for power of the respective Mel frequencies, and then performing a discrete cosine transform.

According to an embodiment of the present invention, technical features of audio may be established by extending the dimensionality of input data of feature values of adjacent frames. A context may be abundantly deduced by adding information on the change in feature values according to time.

According to an embodiment of the present invention, there may be a correlation between the respective variables included in signal descriptors. For example, a Principal Component Analysis (PCA) method may be applied for reduction of the dimensionality of input feature vectors. In this case, the PCA may be a multivariate analysis for examining various variables.

For example, the PCA may be a method in which, when mutually related variables are detected, new variables are generated based on information of the detected variables. For example, variations for p variables (x1, x2, x3 ... xp) associated with each other may be measured. In this case, the variations indicate a change in information of the variables. For example, through the PCA, new variables may be generated using the measured variables. According to an embodiment of the present invention, data displayed as new coordinates by audio feature vectors having the reduced dimensionality may transfer a large amount of information.

The compensation module 230 according to an embodiment of the present invention generates an additional compensation signal for a signal that varies according to motion of the designated object and the electronic device 101. The compensation module 230 detects the motion of the object and the electronic device (e.g., the electronic device 101). For example, the compensation module 230 detects the motion of the object and the electronic device 101 through sonar using an ultrasonic pulse signal. Here, the sonar measures the distance to a control object using the time required for an emitted ultrasonic signal to bounce off an object and return. For example, the compensation module 230 emits an ultrasonic pulse signal toward the object and the electronic device 101 and compares the emitted signal with the received ultrasonic pulse echo signal to detect the motion thereof.

According to an embodiment of the present invention, in order to detect a shaking of the electronic device 101, the compensation module 230 includes at least one of a motion recognition sensor, a gyroscope sensor, and an acceleration sensor. In this case, the gyroscope sensor measures angular velocities for the X, Y, and Z axes to obtain a changed angle. The acceleration sensor measures the gravitational acceleration and motional acceleration for the X, Y, and Z axes. The motion recognition sensor recognizes motion or location of an object and may be a composite sensor in which functions of a terrestrial magnetism sensor, an acceleration sensor, an altimeter, and a gyro sensor are implemented in a single integrated circuit or chip.

According to an embodiment of the present invention, the compensation module 230 changes the recorded signal when the speed of the designated object or the electronic device 101 is varied. For example, the compensation module 230 may change the recorded signal using a Gaussian Mixture Model (GMM). In this case, the GMM is suitable for representing a form in which a set of all observed data is distributed with respect to the average value thereof. The compensation module 230 records the motion of the designated object or the electronic device 101 by obtaining a probability distribution for a particular interval and performing an integration of the particular interval using the differential value of the Gaussian function.

According to an embodiment of the present invention, when the compensation module 230 determines the motion of the object or the electronic device 101, the matrices of the ultrasonic transducer and the signal reception unit 213 are used to perform a calculation in relation to the motion of the designated object and device.

The conversion module 240 converts a signal descriptor into an audio descriptor. According to an embodiment of the present invention, the conversion module 240 perfoms the conversion based on the Gaussian Mixture Model (GMM).

According to an embodiment of the present invention, the conversion module 240 may simultaneously receive an ultrasonic signal and an audio echo signal. The ultrasonic signal and the audio echo signal may be represented by the respective descriptors. For example, Mel Generalize Cepstral Coefficients and ultrasonic signal descriptors may be combined into a single matrix. Gaussian variables (e.g., averages and covariance) may be applied to the conversion for each frame. For example, the conversion may be performed by the Gaussian Mixture Model-based Voice Conversion Algorithm.

The conversion module 240 uses the Gaussian Mixture Model to synthesize the fundamental frequency (F0). For example, the electronic device 101 builds a database by storing voices of the average men and women related to an ultrasonic signal in individual environments (e.g., a quiet environment, a noisy environment, a 30 decibel environment, and a 15 decibel environment). The conversion module 240 stores or synthesizes the fundamental frequency (F0) based on the database information.

According to an embodiment of the present invention, the conversion module 240 divides a signal into a voice part (e.g., an audio signal of an object) and a non-voice part (e.g., train whistle or noise). Such division may be performed according to a pre-stored classification criterion designated by a user. The features of the fundamental frequency (F0) are extracted from the user's short audio sample. As a result, the conversion module 240 extracts the user's fundamental frequency (F0) range and adjusts the fundamental frequency (F0) for the user. For example, when an audio sample is not available, the conversion module 240 may use the pre-stored voice tone of the average men and women.

The synthesis module 250 converts an audio descriptor into an audio signal in a predetermined frequency band. For example, the predetermined frequency band may be a frequency band in which people can hear an audio signal or a frequency band of 20 Hz to 20,000 Hz. Alternatively, the predetermined frequency band may be a frequency band arbitrarily set by a user. According to an embodiment of the present invention, the synthesis module 250 converts Mel Generalized Cepstral Coefficients into an audible audio signal. The output audio signal may be generated by a vocoder system. The vocoder system may be executed as Mel Generalized Cepstral Coefficients of a Mel-Generalized Log Spectral Approximation (MGLSA) digital filter. When an input to the MGLSA filter is provided, a signal is output by the MGLSA that corresponds to a pitch of a sound of an object. According to an embodiment of the present invention, the voice of an object may be predicted by Machine Learning Methods.

FIG. 3 is a block diagram 200 of an audio recognition module 170 of an electronic device 101 according to an embodiment of the present invention.

According to an embodiment of the present invention, the audio recognition module 170 includes a signal acquisition module 210, a feature extraction module 220, a compensation module 230, a conversion module 240, a synthesis module 250, and an adaptation module 260.

According to an embodiment of the present invention, the signal acquisition module 210 includes a signal transmission unit 211, a signal reception unit 213, and an extended signal acquisition unit 215.

According to an embodiment of the present invention, the signal acquisition module 210 includes the signal transmission unit 211 that can transmit a signal and the signal reception unit 213 that can receive a signal. According to an embodiment of the present invention, the signal acquisition module 210 includes an ultrasonic transducer that can transmit an ultrasonic signal toward a designated object or generate an ultrasonic signal.

In this case, the ultrasonic transducer is a transducer that converts electrical energy into acoustic energy. The ultrasonic transducer may be constituted by a semiconductor (e.g., a resistance layer conversion element) and a piezoelectric electro-acoustic conversion element (e.g., a quartz crystal resonator). For example, an ultrasonic signal may be generated by applying a high-frequency voltage to a plate or a rod cut away from a quartz crystal in a predetermined direction and using a harmonic wave that is an odd number of times greater than a fundamental frequency (e.g. several hundred Khz to about 25 Mhz). According to an embodiment of the present invention, the waveform of the ultrasonic signal generated by the ultrasonic transducer is a continuous wave having a predetermined flow or a pulse wave repeated according to a predetermined period for a short duration time.

According to an embodiment of the present invention, the signal transmission unit 211 of the signal acquisition module 210 transmits a signal (e.g., an ultrasonic signal) toward a predetermined object (for example, a human body (e.g., a mouth) or an acoustic source that can generate an audio signal without using an electrical signal). The signal reception unit 213 of the signal acquisition module 210 receives an echo signal obtained by transformation of a signal through a collision with one surface of an object. In this case, the transformation of the signal indicates that parameters of the signal, such as a waveform, a phase, and a frequency, are changed by the collision of the signal with the object.

According to an embodiment of the present invention, the extended signal acquisition unit 215 includes an audio microphone (e.g., a speaker or a microphone) and a video information recognition module (e.g., a camera or a camcorder). For example, the audio microphone records an audio sample output from a designated object (e.g., an object that outputs audio information, a person, or an animal). In this case, the audio sample may include a waveform, an average frequency, and a frequency band of output audio.

According to an embodiment of the present invention, the video information recognition module recognizes video information of the designated object (e.g., the object that outputs audio information, the person, or the animal).

For example, when the designated object is a person, the video information recognition module recognizes the change of the shape of the person's lips. The video information recognition module extracts feature points of the lips (e.g. the length, vertex, and curvature of the shape of the lips) and recognizes a degree to which the extracted feature points are changed.

According to an embodiment of the present invention, the video information recognition module detects motion of the electronic device 101 and an object. When the object is a person, the video information recognition module may distinguishably recognize the gender of the object.

The feature extraction module 220 receives data from the signal acquisition module 210. Based on the signal received from the signal acquisition module 210, the feature extraction module 220 extracts audio features included in the signal. According to an embodiment of the present invention, the feature extraction module 220 extracts audio features from the received signal based on frames having a predetermined duration. For example, the feature extraction module 220 divides the signal based on a predetermined reference (e.g., a time or a frequency) and overlaps data successively received according to the predetermined reference.

According to an embodiment of the present invention, the feature extraction module 220 extracts a signal descriptor included in the echo signal and analyzes the extracted signal descriptor. In this case, the signal descriptor indicates variables included in variables of the time domain and the frequency domain.

For example, the signal descriptor may be calculated for respective frames including the time domain variables and the frequency domain variables. For example, a signal is basically configured with a waveform including amplitude and a predetermined frequency and may include variables for a mean value, a standard deviation, power, a ZCR, a variation, an envelope, and a differential value thereof in the time domain. According to an embodiment of the present invention, the feature extraction module 220 calculates the extracted signal descriptor (e.g., variables for a mean value, a standard deviation, power, a ZCR, a variation, an envelope, and a differential value of a signal in the time domain).

According to an embodiment of the present invention, the features calculated in the frequency domain for the signal descriptors included in the echo signal represent mobility induced by motion of an object and the Doppler effect caused by the echo signal. In this case, the Doppler effect indicates a change in waves of a single or multiple objects in motion. The feature extraction module 220 calculates spectral power of the echo signal in a predetermined frequency range. For example, the spectral power may be restricted between a minimum frequency (fmin) and a maximum frequency (fmax). According to another example, the spectral power is divided into symmetric partial bands in a vicinity of a frequency (fs) of a transmitted signal (e.g., an ultrasonic signal).

According to an embodiment of the present invention, the widths of the divided bands are gradually increased with the distance from the frequency (fs) of the signal to the respective bands. According to an embodiment of the present invention, the calculated spectral signal descriptor is used in a log operation of Mel Frequency Cepstral Coefficients (MFCC), Mel Generalized Cepstral Coefficients, or frequency power that will subsequently be converted in the conversion module 240.

In this case, "Mel" of Mel Frequency Cepstral Coefficients (MFCC) is a unit for representing a nonlinear frequency characteristic of a signal output by a human body. MFCC may be calculated by performing a Fourier transform of an echo signal, obtaining power of a spectrum divided by a pre-designated Mel scale, obtaining log values for power of the respective Mel frequencies, and then performing a discrete cosine transform.

According to an embodiment of the present invention, the feature extraction module 220 extracts a signal descriptor included in the echo signal and analyzes the extracted signal descriptor. The feature extraction module 220 calculates three descriptors to analyze the echo signal. The three descriptors are referred to as D1, D2, and D3, respectively, where D1 represents an intensity of a Doppler frequency shift effect for a signal x of a carrier frequency. D1 is calculated using Equation 1 below.

Here, $\theta(x)$ is a sum of two frequency bands corresponding to a positive frequency shift and a negative frequency shift, where "std" refers to a standard deviation. The standard deviation indicates a frequency characteristic value representing a degree of scattering for quantitative characteristic values of a statistical group. "min (a, b)" is a function that outputs the smaller of values "a" and "b" through a comparison of "a" and "b" and if value "a" is equal to value "b," one of "a" and "b" is output.

As in Equation 1 below, a frequency of 36.9 kHz to 40 kHz and a frequency of 40 kHz to 43.1 kHz is determined as a frequency variable. For example, when a predetermined object does not generate audio information (e.g., when a person does not talk), the signal peak of the frequency of an echo signal may be 40 kHz. When a predetermined object generates audio information (e.g., when a person talks) or moves to cause the Doppler effect, power of a frequency spectrum around 40 kHz may be arbitrarily selected and a calculation may be made as follows. According to an embodiment of the present invention, the frequency variable to be included in the sigma of Equation (1) below may be changed.

$$D1 = min\left(std\left(\sum_{f=36.9kHz}^{40kHz}\Theta(x)\right), std\left(\sum_{f=40kHz}^{43.1kHz}\Theta(x)\right)\right) \quad ...(1)$$

According to an embodiment of the present invention, the descriptors D2 and D3 are calculated using Equations (2) and (3) below. In this case, "i" refers to the number of arbitrary samples.

$$D2 = log\left(2log\left(\left|D_f[i] - D_f[i+1]\right|\right)\right) \quad ...$$

$$D3 = log\left(D_f[i] \cdot D_f[i+1]\right) \quad ...(3)$$

According to an embodiment of the present invention, $D_f[i]$ may be calculated using Equation (4) below. In this case, N is the number of audio information segments (e.g., speech samples) in a single frame. L is calculated using Equation (5) and corresponds to a value obtained by adding all differences between the sizes of samples. The "d" is calculated using Equation (6) and is the maximum of absolute values of differences between the first sample and all consecutive samples. In this case, M may be the number of samples for a signal including an interval where at least audio information is or is not generated.

$$D_f[i] = \frac{log\ (N-1)}{log\left(\frac{d}{L}\right) + log\ (N-1)} \quad ...(4)$$

$$L = \sum_{i=1}^{N-1} |x_{i+1} - x_i| \quad ...(5)$$

$$d \max_{i=2,3,...M} |x_1 - x_i| \quad ...(6)$$

The compensation module 230 according to an embodiment of the present invention generates an additional compensation signal for a signal changed according to motion of the designated object and the electronic device 101. The compensation module 230 detects motion of an object and the electronic device 101. For example, the compensation module 230 detects the motion of the object and the electronic device 101 through sonar using an ultrasonic pulse signal. In this case, the sonar measures the distance to a control object using the time required for an emitted ultrasonic signal to bounce off an object and return.

According to an embodiment of the present invention, in order to detect a shaking of the electronic device 101, the compensation module 230 uses at least one of a motion recognition sensor, a gyroscope sensor, and an acceleration sensor. In this case, the gyroscope sensor measures angular velocities for the X, Y, and Z axes to obtain a changed angle. The acceleration sensor measures the gravitational acceleration and motional acceleration for the X, Y, and Z axes. The motion recognition sensor recognizes motion or location of an object and may be a composite sensor in which functions of a terrestrial magnetism sensor, an acceleration sensor, an altimeter, and a gyro sensor are implemented in a single chip.

According to an embodiment of the present invention, the compensation module 230 changes the recorded signal when the speed of the designated object or the electronic device (e.g., the electronic device 101) is varied. For example, the compensation module 230 may change the recorded signal using a Gaussian Mixture Model (GMM). In this case, the GMM is suitable for representing a form in which a set of all observed data is distributed with respect to the average value thereof. The compensation module 230 records the motion of the designated object or the electronic device by obtaining a probability distribution for a certain interval and integrates the particular interval using the differential value of the Gaussian function.

According to an embodiment of the present invention, the matrices of the ultrasonic transducer and the signal reception unit 213 are used to perform a calculation in relation to the motion of the designated object and device.

The conversion module 240 converts a signal descriptor into an audio descriptor. According to an embodiment of the present invention, the conversion module 240 performs the conversion based on the GMM.

According to an embodiment of the present invention, the conversion module 240 simultaneously receives an ultrasonic signal and an audio echo signal. The ultrasonic signal and the audio echo signal are represented by the respective descriptors. For example, Mel Generalize Cepstral Coefficients and ultrasonic signal descriptors may be combined into a single matrix. Gaussian variables (e.g., averages and covariance) may be applied to the conversion for each frame. For example, the conversion may be performed by the Gaussian Mixture Model-based Voice Conversion Algorithm.

The conversion module 240 uses the GMMto synthesize the fundamental frequency (F0). For example, the electronic device 101 builds a database by storing voices of average men and women related to an ultrasonic signal in individual environments (e.g., a quiet environment, a noisy environment, a 30 decibel environment, and a 15 decibel environment). The conversion module 240 divides a signal into a voice part (e.g., an audio signal of an object) and a non-voice part (e.g., a train whistle or noise). Such a division may be performed according to a pre-stored classification criterion. The features of the fundamental frequency (F0) are extracted from the user's short audio sample. As a result, the conversion module 240 extracts the user's fundamental frequency (F0) range and adjusts the fundamental frequency (F0) for the user. If an audio sample is not available, the conversion module 240 uses a predetermined voice tone of the average men and women.

The synthesis module 250 converts an audio descriptor into an audio signal in a predetermined frequency band. For example, the predetermined frequency band may be a frequency band in which people can hear an audio signal or a frequency band of 20 Hz to 20,000 Hz. According to an embodiment of the present invention, the synthesis module 250 converts Mel Generalized Cepstral Coefficients into an audible audio signal. The output audio signal may be generated by a vocoder system. The vocoder system may be executed as Mel Generalized Cepstral Coefficients of a Mel-Generalized Log Spectral Approximation (MGLSA) digital filter. When an input to the MGLSA filter is provided, a signal is output by the MGLSA that corresponds to the pitch of a sound of an object. According to an embodiment of the present invention, the voice of an object may be predicted by Machine Learning Methods.

According to an embodiment of the present invention, when the amount of audio data corresponding to the converted audio signal is less than or equal to that of predetermined threshold audio data, the synthesis module 250 outputs the converted audio signal to which pre-stored data is added. For example, when the amount of received audio data is less than or equal to that of the threshold audio data, the received audio data may be amplified through scaling of the converted audio signal. In another example, the synthesis module may add a fundamental frequency (e.g., a pre-stored average fundamental frequency of men or women) to the received audio signal to output the audio signal.

According to an embodiment of the present invention, the adaptation module 260receives, from the signal acquisition module 210, the information acquired by the signal acquisition module 210. The adaptation module 260 recognizes the determined object and determines the gender of the object through a comparison of the received information and a predetermined database.

The adaptation module 260 recognizes the determined object (e.g., a person, or an object that outputs audio) and adjust the pitch and timbre of the audio signal to be suitable for the actual audio of the object. For example, the adaptation module 260 may determine audio data of the object among pre-stored data based on received audio and video information and adjust at least one of a frequency, pitch, and timbre of audio included in the received audio information based on the audio data of the determined object.

Such an adjustment may be determined based on basic information on objects previously stored in the electronic device 101. For example, the basic information on each object may include timbre of the object, a fundamental frequency of audio output from the object, an audio sample, and a photo of the object. The basic information on each object may be stored by a user input. In this case, the information stored by the user input may be acquired by taking a photo using the video information recognition module or by several words output from the object.

In another example, the adaptation module 260 receives video information of the object from the signal acquisition module 210 and determines the fundamental frequency band of the object based on the received video information. For example, when the gender of the object is determined by the received video information, the fundamental frequency band according to the gender (e.g., the average frequency band of men or women) may be determined.

Such a determination of the fundamental frequency band may be determined based on basic information on objects previously stored in the electronic device 101. For example, the fundamental frequency band may be determined through a comparison of the received audio and video information to the average frequency bands of men and women and the average frequency bands according to ages which have been previously stored in the electronic device.

FIG. 4 is a block diagram of the feature extraction module 220 of the electronic device 101 according to an embodiment of the present invention.

The feature extraction module 220 receives data from the signal acquisition module 210. Based on the signal received from the signal acquisition module 210, the feature extraction module 220 extracts audio features included in the signal. According to an embodiment of the present invention, the feature extraction module 220 extracts audio features from the received signal based on frames having a predetermined duration. For example, the feature extraction module 220 divides the signal based on a predetermined reference (e.g., a time or a frequency) and overlaps data successively received according to the predetermined reference.

According to an embodiment of the present invention, the feature extraction module 220 extracts a signal descriptor included in an echo signal and analyzes the extracted signal descriptor. Inthis case, the signal descriptor indicates variables included in variables of a time domain and frequency domain.

For example, the signal descriptor is calculated for respective frames including the time domain variables and the frequency domain variables. For example, a signal is basically configured with a waveform including amplitude and a predetermined frequency and includes variables for a mean value, a standard deviation, power, a ZCR, a variation, an envelope, and a differential value thereof in the time domain. According to an embodiment of the present invention, the feature extraction module 220 calculates an extracted signal descriptor (e.g., variables for a mean value, a standard deviation, power, a ZCR, a variation, an envelope, and a differential value of a signal in the time domain).

According to an embodiment of the present invention, the features calculated in the frequency domain for the signal descriptors included in the echo signal represent mobility induced by motion of an object and the Doppler effect caused by the echo signal. In this case, the Doppler effect indicates the change in waves of a single or multiple objects in motion. The feature extraction module 220 calculates spectral power of the echo signal in a predetermined frequency range. For example, the spectral power may be restricted between a minimum frequency (fmin) and a maximum frequency (fmax). According to another example, the spectral power is divided into symmetric partial bands in the vicinity of a frequency (fs) of a transmitted signal (e.g., an ultrasonic signal).

According to an embodiment of the present invention, the widths of the divided bands gradually increase with the distance from the frequency (fs) of the signal to the respective bands. According to an embodiment of the present invention, the calculated spectrum signal descriptor is used in a log operation of Mel Frequency Cepstral Coefficients (MFCC), Mel Generalized Cepstral Coefficients, or frequency power that will subsequently be converted in the conversion module 240.

In this case, "Mel" of Mel Cepstral Coefficients (MFCC) is a unit for representing a nonlinear frequency characteristic of a signal output by a human body. MFCC may be calculated by performing a Fourier transform of the echo signal, obtaining power of a spectrum divided by a pre-designated Mel scale, obtaining log values for power of the respective Mel frequencies, and then performing a discrete cosine transform.

According to an embodiment of the present invention, technical features of audio are established by extending the dimensionality of input data of feature values of adjacent frames. A context becomes abundant by adding information on a change in feature values according to time.

According to an embodiment of the present invention, the feature extraction module 220 may be very highly correlated with signal descriptors. For example, a Principal Component Analysis (PCA) method may be applied for reduction of the dimensionality of input feature vectors. In this case, the PCA is a multivariate analysis for examining various variables. For example, the PCA is a method in which, when mutually related variables are detected, new variables are generated based on information of the detected variables. For example, variations for p variables (x1, x2, x3 ... xp) associated with each other are measured. In this case, the variations may be the amount of information of the variables. New variables are generated using the measured variables. Data displayed as new coordinates by feature vectors having the reduced dimensionality may transfer a large amount of information.

The feature extraction module 220 transfers the extracted signal descriptor to the audio compensation module 230 and the conversion module 240.

FIG. 5 is a flowchart illustrating an audio recognition method of an electronic device according to an embodiment of the present invention.

In step 501, a signal transmission unit 211 of a signal acquisition module 210 transmits a signal toward a designated object. According to an embodiment of the present invention, the signal acquisition module 210 includes an ultrasonic transducer that can transmit an ultrasonic signal toward the designated object or generate an ultrasonic signal.

For example, the signal transmission unit 211 of the signal acquisition module 210 may transmit a signal (e.g., an ultrasonic signal) toward a predetermined object (for example, a human body (e.g., mouth) or an acoustic source that can generate an audio signal without using an electric signal).

In step 503, the signal acquisition module 210 receives an echo signal obtained by transformation of the signal through a collision with one surface of the object. In this case, the transformation of the signal indicates that parameters of the signal, such as a waveform, a phase, and a frequency, are changed by the collision of the signal with the object.

In step 505, a feature extraction module 220 extracts a signal descriptor included in the echo signal and analyzes the extracted signal descriptor. Based on the echo signal received from the signal acquisition module 210, the feature extraction module 220 extracts audio features included in the echo signal. In this case, the signal descriptor indictes variables included in variables of the time domain and the frequency domain.

For example, the signal descriptor is calculated for respective frames including the time domain variables and the frequency domain variables. For example, a signal is basically configured with a waveform including amplitude and a predetermined frequency and may include variables for a mean value, a standard deviation, power, a ZCR, a variation, an envelope, and a differential value thereof in the time domain. According to an embodiment of the present invention, the feature extraction module 220 calculates an extracted signal descriptor (e.g., variables for a mean value, a standard deviation, power, a ZCR, a variation, an envelope, and a differential value of a signal in the time domain).

The features calculated in the frequency domain for the signal descriptors included in the echo signal represent mobility induced by motion of an object and the Doppler effect caused by the echo signal. In this case, the Doppler effect indicates the change in waves of a single or multiple objects in motion. The feature extraction module 220 calculates spectral power of the echo signal in a predetermined frequency range. For example, the spectrum power may be restricted between a minimum frequency (fmin) and a maximum frequency (fmax). According to another example, the spectral power is divided into symmetric partial bands in the vicinity of a frequency (fs) of a transmitted signal (e.g., an ultrasonic signal).

The feature extraction module 220 transfers the analyzed information to a conversion module 240. In step 507, the conversion module 240 converts a signal descriptor into an audio descriptor. According to an embodiment of the present invention, the conversion module 240 performs the conversion based on the Gaussian Mixture Model (GMM).

According to an embodiment of the present invention, the conversion module 240 simultaneously receives an ultrasonic signal and an audio echo signal. The ultrasonic signal and the audio echo signal are represented by the respective descriptors. For example, Mel Generalize Cepstral Coefficients and ultrasonic signal descriptors may be combined into a single matrix. Gaussian variables (e.g., averages and covariance) may be applied to the conversion for each frame. For example, the conversion may be performed by the Gaussian Mixture Model-based Voice Conversion Algorithm.

In step 509, a synthesis module 250 converts an audio descriptor into an audio signal in a predetermined frequency band. For example, the predetermined frequency band may be a frequency band in which people can hear an audio signal or a frequency band of 20 Hz to 20,000 Hz. According to an embodiment of the present invention, the synthesis module 250 converts Mel Generalized Cepstral Coefficients into an audible audio signal. The output audio signal may be generated by a vocoder system. The vocoder system may be executed as Mel Generalized Cepstral Coefficients of a Mel-Generalized Log Spectral Approximation (MGLSA) digital filter. When an input to the MGLSA filter is provided, a signal is output by the MGLSA that corresponds to a pitch of a sound of an object.

In step 511, the synthesis module 250 outputs the converted audio signal. The synthesis module 250 may output the converted audio signal through a speaker included in the electronic device.

FIG. 6 is a flowchart illustrating an audio recognition method of an electronic device 101 according to an embodiment of the present invention.

In step 601, a signal reception unit 211 of a signal acquisition module 210 transmits a signal toward a designated object. According to an embodiment of the present invention, the signal acquisition module 210 includes an ultrasonic transducer that transmits an ultrasonic signal toward the designated object or generates an ultrasonic signal.

For example, the signal transmission unit 211 of the signal acquisition module 210 may transmit a signal (e.g., an ultrasonic signal) toward a predetermined object (for example, a human body (e.g., mouth) or an acoustic source that can generate an audio signal without using an electric signal).

In step 603, the signal acquisition module 210 receives an echo signal obtained by transformation of the signal through a collision with one surface of the object. In this case, the transformation of the signal indicates that parameters of the signal, such as a waveform, a phase, and a frequency, are changed by the collision of the signal with the object.

In step 605, a compensation module 230 detects information on motion of an object and the electronic device 101. In order to detect a shaking of the electronic device 101, the compensation module 230 may use at least one of a motion recognition sensor, a gyroscope sensor, and an acceleration sensor. In this case, the gyroscope sensor measures angular velocities for the X, Y, and Z axes to obtain a changed angle. The acceleration sensor measures the gravitational acceleration and motional acceleration for the X, Y, and Z axes. The motion recognition sensor recognizes motion or location of an object and may be a composite sensor in which functions of a terrestrial magnetism sensor, an acceleration sensor, an altimeter, and a gyro sensor are implemented in a single chip.

In step 607, the compensation module 230 generates a compensation signal based on the detected information.

In step 609, the compensation module 230 transfers the compensation signal to a conversion module 240.

In step 611, the conversion module 240 converts a signal descriptor into an audio descriptor based on the signal descriptor and the compensation signal. The conversion module 240 may simultaneously receive an ultrasonic signal and an audio echo signal. The ultrasonic signal and the audio echo signal may be represented by the respective descriptors. For example, Mel Generalize Cepstral Coefficients and ultrasonic signal descriptors may be combined into a single matrix. Gaussian variables (e.g., averages and covariance) may be applied to the conversion for each frame. For example, the conversion may be performed by the Gaussian Mixture Model-based Voice Conversion Algorithm.

In step 613, a synthesis module 250 converts the audio descriptor into an audio signal in a predetermined frequency band. For example, the predetermined frequency band may be a frequency band in which people can hear an audio signal or a frequency band of 20 Hz to 20,000 Hz. According to an embodiment of the present invention, the synthesis module 250 converts Mel Generalized Cepstral Coefficients into an audible audio signal. The output audio signal may be generated by a vocoder system. The vocoder system may be executed as Mel Generalized Cepstral Coefficients of a Mel-Generalized Log Spectral Approximation (MGLSA) digital filter. When an input to the MGLSA filter isprovided, a signal is output by the MGLSA filter that corresponds to the pitch of a sound of an object.

In step 615, the synthesis module 250 outputs the converted audio signal. The synthesis module 250 may output the converted audio signal through a speaker included in the electronic device 101.

FIG. 7 is a flowchart illustrating an audio recognition method of an electronic device 101 according to an embodiment of the present invention.

In step 701, a signal reception unit 211 of a signal acquisition module 210 transmits a signal toward a designated object. According to an embodiment of the present invention, the signal acquisition module 210 includes an ultrasonic transducer that transmits an ultrasonic signal toward the designated object or generates an ultrasonic signal.

For example, the signal transmission unit 211 of the signal acquisition module 210 may transmit a signal (e.g., an ultrasonic signal) toward a predetermined object (for example, a human body (e.g., mouth) or an acoustic source that can generate an audio signal without using an electric signal).

In step 703, the signal acquisition module 210 receives an echo signal obtained by transformation of the signal through a collision with one surface of the object. In this case, the transformation of the signal indicates that parameters of the signal, such as a waveform, a phase, and a frequency, are changed by the collision of the signal with the object.

In step 705, a compensation module 230 detects information on motion of an object and the electronic device 101. In order to detect a shaking of the electronic device 101, the compensation module 230 may use at least one of a motion recognition sensor, a gyroscope sensor, and an acceleration sensor. In this case, the gyroscope sensor measures angular velocities for the X, Y, and Z axes to obtain a changed angle. The acceleration sensor measure the gravitational acceleration and motional acceleration for the X, Y, and Z axes. The motion recognition sensor recognizes motion or location of an object and may be a composite sensor in which functions of a terrestrial magnetism sensor, an acceleration sensor, an altimeter, and a gyro sensor are implemented in a single chip.

In step 707, the compensation module 230 generates a compensation signal based on the detected information.

In step 709, the compensation module 230 transfers the compensation signal to a conversion module 240.

In step 711, the signal acquisition module 210 acquires audio information and video information of an object. The signal acquisition unit 210 may include an audio microphone (e.g., a speaker or a microphone) and a video information recognition module (e.g., a camera or a camcorder). For example, the audio microphone may record an audio sample output from a designated object (e.g., an object that outputs audio information, a person, or an animal). In this case, the audio sample may include a waveform, an average frequency, and a frequency band of output audio.

In step 713, an adaptation module 260 determines audio data of the object among pre-stored data based on the audio information and video information and adjusts the received audio information of the object based on the determined audio data.

The adaptation module 260 may recognize the determined object (e.g., a person, or an object that outputs audio) and adjust the pitch and timbre of the audio signal to be suitable for the actual audio of the object. For example, the adaptation module 260 may determine audio data of the object among pre-stored data based on received audio and video information and adjust at least one of a frequency, pitch, and timbre of audio included in the received audio information based on the audio data of the determined object.

Such adjustment may be determined based on basic information on objects previously stored in the electronic device 101. For example, the basic information on each object may include timbre of the object, a fundamental frequency of audio output from the object, an audio sample, and a photo of the object. The basic information on each object may be stored by a user input. In this case, the information stored by the user input may be acquired by taking a photo using the video information recognition module or by several words output from the object.

In another example, the adaptation module 260 receives video information of the object from the signal acquisition module and determines the fundamental frequency band of the object based on the received video information. For example, when the gender of the object is determined by the received video information, the fundamental frequency band according to the gender (e.g., the average frequency band of men or women) may be determined.

In step 715, the adaptation module 260 transfers the adjusted audio information of the object.

In step 717, the conversion module 240 converts a signal descriptor into an audio descriptor based on the signal descriptor, the compensation signal, and the adjusted audio information of the object. An ultrasonic signal may be simultaneously received together with an audio echo signal. The ultrasonic signal and the audio echo signal may be represented by the respective descriptors. For example, Mel Generalize Cepstral Coefficients and ultrasonic signal descriptors may be combined into a single matrix. Gaussian variables (e.g., averages and covariance) may be applied to the conversion for each frame. For example, the conversion may be performed by the Gaussian Mixture Model-based Voice Conversion Algorithm.

In step 719, a synthesis module 250 converts the audio descriptor into an audio signal in a predetermined frequency band. For example, the predetermined frequency band may be a frequency band in which people can hear an audio signal or a frequency band of 20 Hz to 20,000 Hz. According to an embodiment of the present invention, the synthesis module 250 converts Mel Generalized Cepstral Coefficients into an audible audio signal. The output audio signal may be generated by a vocoder system. The vocoder system may be executed as Mel Generalized Cepstral Coefficients of a Mel-Generalized Log Spectral Approximation (MGLSA) digital filter. When an input to the MGLSA filter isprovided, a signal is output from the MGLSA that corresponds to the pitch of a sound of an object.

In step 721, the synthesis module 250 outputs the converted audio signal. The synthesis module 250 may output the converted audio signal through a speaker included in the electronic device.

FIG. 8 is a block diagram of an electronic device 800 according to an embodiment of the present invention. The electronic device 800 may include, for example, all or some of the electronic device 101 illustrated in FIG. 1.

Referring to FIG. 8, the electronic device 800 includes at least one Application Processor (AP) 810, a communication module 820, a Subscriber Identification Module (SIM) card 824, a memory 830, a sensor module 840, an input device 850, a display module 860, an interface 870, an audio module 880, a camera module 891, a power management module 895, a battery 896, an indicator 897, and a motor 898.

The AP 810 controls a plurality of hardware or software components connected to the AP 810 by driving an operating system or an application program, processes various types of data including multimedia data, and performs calculations. The AP 810 may be implemented as, for example, a System on Chip (SoC). According to an embodiment of the present invention, the AP 810 may further include a Graphics Processing Unit (GPU).

The communication module 820 (for example, the communication interface 160) performs data transmission/reception in communication between the electronic device 800 (for example, the electronic device 101 in FIG. 1) and other electronic devices (for example, the electronic device 101 and the server 106 in FIG. 1) connected thereto through a network. According to an embodiment of the present invention, the communication module 820 includes a cellular module 821, a Wi-Fi module 823, a BT module 825, a GPS module 827, an NFC module 828, and a Radio Frequency (RF) module 829.

The cellular module 821 provides a voice call, a video call, a Short Message Service (SMS), or an Internet service through a communication network (for example, LTE, LTE-A, CDMA, WCDMA, UMTS, WiBro, or GSM). Furthermore, the cellular module 821 may distinguish and authenticate electronic devices within a communication network using the SIM card 824. According to an embodiment of the present invention, the cellular module 821 performs at least some functions which the AP 810 may provide. For example, the cellular module 821 may perform at least some of the multimedia control function.

According to an embodiment of the present invention, the cellular module 821 includes a Communication Processor (CP). For example, the cellular module 821 may be implemented as an SoC. Although the elements such as the cellular module 821 (for example, a communication processor), the memory 830, and the power management module 895 are illustrated as being separate from the AP 810 in FIG. 8, the AP 810 may include at least some of the aforementioned elements (for example, the cellular module 821) according to an embodiment of the present invention.

According to an embodiment of the present invention, the AP 810 or the cellular module 821 (for example, a communication processor) loads instructions or data, received from a non-volatile memory or at least one of the other elements connected thereto, into a volatile memory and processes the loaded instructions or data. Furthermore, the AP 810 or the cellular module 821 stores data received from or generated by at least one of the other elements in a non-volatile memory. The AP 810 and/or the cellular module 821 may constitute the entire or a part of the processor 120 described above with reference to FIG. 1.

For example, the Wi-Fi module 823, the BT module 825, the GPS module 827, and the NFC module 828 may include a processor for processing data transmitted/received through the corresponding module.

Although the cellular module 821, the Wi-Fi module 823, the BT module 825, the GPS module 827, and the NFC module 828 are illustrated as individual modules in FIG. 8, at least some (for example, two or more) of the cellular module 821, the Wi-Fi module 823, the BT module 825, the GPS module 827, and the NFC module 828 may be included within one Integrated Chip (IC) or one IC package according to an embodiment of the present invention. For example, at least some (for example, the communication processor corresponding to the cellular module 821 and the Wi-Fi processor corresponding to the Wi-Fi module 823) of processors corresponding to the cellular module 821, the Wi-Fi module 823, the BT module 825, the GPS module 827, and the NFC module 828 may be implemented as one SoC.

The RF module 829 transmits/receives data, for example, an RF signal. For example, the RF module 829 may include a transceiver, a Power Amplifier Module (PAM), a frequency filter, a Low Noise Amplifier (LNA), or the like. For example, the RF module 829 may further include a conductor or a conductive wire for transmitting/receiving an electromagnetic wave in free space in a wireless communication. Although the cellular module 821, the Wi-Fi module 823, the BT module 825, the GPS module 827, and the NFC module 828 share one RF module 829 in FIG. 8, at least one of the cellular module 821, the Wi-Fi module 823, the BT module 825, the GPS module 827, and the NFC module 828 may transmit/receive an RF signal through a separate RF module according to one embodiment.

The SIM card 824 is a card that includes a subscriber identification module and may be inserted into a slot formed in certain position in the electronic device 800. The SIM card 824 includes unique identification information (for example, an Integrated Circuit Card Identifier (ICCID)) or subscriber information (for example, an International Mobile Subscriber Identity (IMSI)).

The memory 830 (for example, the memory 130 of FIG. 1) may include an internal memory 832 or an external memory 834. The internal memory 832 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, and the like).

According to an embodiment of the present invention, the internal memory 832 may be a Solid State Drive (SSD). The external memory 834 may further include a flash drive, for example, a Compact Flash (CF) drive, a Secure Digital (SD) memory card, a Micro Secure Digital (Micro-SD) memory card, a Mini Secure Digital (Mini-SD) memory card, an extreme Digital (xD) memory card, a memory stick, or the like. The external memory 834 may be functionally connected to the electronic device 800 through various interfaces. According to an embodiment of the present invention, the electronic device 800 may further include a storage device (or storage medium) such as a hard disk drive.

The sensor module 840 measures a physical quantity or detects an operating state of the electronic device 800 and converts the measured or detected information to an electrical signal. For example, the sensor module 840 may include at least one of a gesture sensor 840A, a gyro sensor 840B, an atmospheric pressure sensor 840C, a magnetic sensor 840D, an acceleration sensor 840E, a grip sensor 840F, a proximity sensor 840G, a color sensor 840H (for example, a Red/Green/Blue (RGB) sensor), a bio-sensor 840I, a temperature/humidity sensor 840J, an illuminance sensor 840K, and an Ultra Violet (UV) light sensor 840M. Additionally or alternatively, the sensor module 840 may include an Electronic nose (E-nose) sensor, an ElectroMyoGraphy (EMG) sensor, an ElectroEncephaloGram (EEG) sensor, an ElectroCardioGram (ECG) sensor, an InfraRed (IR) sensor, an iris sensor, a fingerprint sensor, and the like. The sensor module 840 may further include a control circuit for controlling one or more sensors included therein.

The input device 850 may include a touch panel 852, a pen sensor 854, a key 856, or an ultrasonic input device 858. For example, the touch panel 852 recognizes a touch input through at least one of a capacitive type touch panel, a resistive type touch panel, an infrared type touch panel, and an acoustic wave type touch panel. The touch panel 852 may further include a control circuit. The capacitive type touch panel recognizes physical contact or a proximity of a contact. The touch panel 852 may further include a tactile layer. In this case, the touch panel 852 provides a user with a tactile reaction.

For example, the pen sensor 854 may be implemented by using the same or similar method of receiving a user’s touch input or by using a separate recognition sheet. For example, the key 856 may include a physical button, an optical key, or a keypad. The ultrasonic input unit 858 identifies data by detecting an acoustic wave with a microphone (for example, a microphone 888) of the electronic device 800 through an input unit for generating an ultrasonic signal, and performs wireless recognition. According to an embodiment of the present invention, the electronic device 800 receives a user input from an external device (for example, a computer or server) connected thereto using the communication module 820.

The display module 860 (for example, the display 150 of FIG. 1) may include a panel 862, a hologram device 864, or a light interference 866. For example, the panel 862 may be a Liquid Crystal Display (LCD) panel, an Active Matrix Organic Light Emitting Diode (AM-OLED) panel, or the like. For example, the panel 862 may be implemented to be flexible, transparent, or wearable. The panel 862 may be formed to be a single module with the touch panel 852. The hologram device 864 renders a three dimensional image in the air by using the interference of light. The light interface 866 projects light onto a screen to display an image. For example, the screen may be located internal or external to the electronic device 800. According to an embodiment of the present invention, the display 860 may further include a control circuit for controlling the panel 862, the hologram device 864, or the light interface 866.

For example, the interface 870 may include a High-Definition Multimedia Interface (HDMI) 872, a Universal Serial Bus (USB) 874, an optical interface 876, or a D-subminiature (D-sub) connector 878. For example, the interface 870 may be included in the communication interface 160 illustrated in FIG. 1. Additionally or alternatively, the interface 870 may include, for example, a Mobile High-definition Link (MHL) interface, a Secure Digital (SD)/Multi-Media Card (MMC) interface, or an Infrared Data Association (IrDA) standard interface.

The audio module 880 bilaterally converts a sound and an electrical signal. For example, at least some elements of the audio module 880 may be included in the input/output interface 140 illustrated in FIG. 1. For example, the audio module 880 processes voice information input or output through a speaker 882, a receiver 884, an earphone 886, or a microphone 888.

According to an embodiment of the present invention, the camera module 891 is a device that can capture still and moving images, and may include one or more image sensors (for example, a front image sensor or a rear image sensor), a lens, an Image Signal Processor (ISP), or a flash (for example, a Light Emitting Diode (LED) flash or a xenon lamp).

The power management module 895 manages power of the electronic device 800. The power management module 895 may include, for example, a Power Management Integrated Circuit (PMIC), a charger Integrated Circuit (IC), or a battery gauge.

For example, the PMIC may be mounted to an integrated circuit or an SoC semiconductor. Charging methods may be classified into a wired charging method and a wireless charging method. The charger IC may charge a battery and prevent the introduction of over-voltage or over-current from a charger. According to an embodiment of the present invention, the charger IC may include a charger IC for at least one of the wired charging method and the wireless charging method. A magnetic resonance type charger, a magnetic induction type charger, or an electromagnetic type charger may be exemplified as the wireless charging method, and an additional circuit for wireless charging, such as a coil loop circuit, a resonance circuit, a rectifier circuit, and the like may be added.

For example, the battery gauge measures an amount of battery power remaining in the battery 896, a charging voltage and current, or temperature of the battery 896. The battery 896 may store or generate electricity and supply power to the electronic device 800 using the stored or generated electricity. For example, the battery 896 may include a rechargeable battery or a solar battery.

The indicator 897 display a state of the electronic device 800 or a part thereof (for example, the AP 810), for example, a boot-up state, a message state, a charging state, or the like. A motor 898 converts an electrical signal into a mechanical vibration. The electronic device 800 includes a processing device (for example, a GPU) for supporting mobile TV. For example, the processing unit for supporting mobile TV processes media data according to a standard of Digital Multimedia Broadcasting (DMB), Digital Video Broadcasting (DVB), media flow, or the like.

The above described components of the electronic device according to an embodiment of the present invention may be formed of one or more components, and a name of a corresponding component element may be changed based on the type of electronic device. The electronic device according to the present invention may include at least one of the above-described elements. Some of the above-described elements may be omitted from the electronic device, or the electronic device may further include additional elements. Further, some of the components of the electronic device according to the present invention may be combined into one entity, which can perform the same functions as those of the components before the combination.

The term "module" used in the present invention may refer to, for example, a unit including one or more combinations of hardware, software, and firmware. The term "module" may be interchangeably used with a term, such as "unit," "logic," "logical block," "component," or "circuit." The term "module" may refer to a smallest unit of an integrated component or a part thereof. The term "module" may refer to a smallest unit that performs one or more functions or a part thereof. The term "module" may refer to a module that is mechanically or electronically implemented. For example, the term "module" according to the present invention may refer to at least one of an Application-Specific Integrated Circuit (ASIC), a Field-Programmable Gate Array (FPGA), and a programmable-logic device for performing operations which are known or will be developed.

FIG. 9 illustrates a communication protocol 900 between a plurality of electronic devices 910 and 930 according to an embodiment of the present invention.

Referring to FIG. 9, the communication protocol 900 may include a device discovery protocol 951, a capability exchange protocol 953, a network protocol 955, and an application protocol 957.

According to an embodiment of the present invention, the device discovery protocol 951 is a protocol that allows the electronic devices 910 and 930 to detect an external electronic device capable of communicating therewith or connect the detected external electronic device thereto. For example, the electronic device 910 (e.g., the electronic device 101) detects the electronic device 930 (e.g., the electronic device 104), as a device which can communicate therewith, through a communication method (e.g., Wi-Fi, BT, or USB) which can be used in the electronic device 910, using the device discovery protocol 951. For communication with the electronic device 930, the electronic device 910 acquires and stores identification information on the detected electronic device 930 using the device discovery protocol 951. For example, the electronic device 910 establishes communication with the electronic device 930 based on at least the identification information.

According to an embodiment of the present invention, the device discovery protocol 951 is a protocol for mutual authentication between a plurality of electronic devices. For example, the electronic device 910 performs authentication between the electronic device 910 and the electronic device 930, based on communication information (e.g., a Media Access Control (MAC) address, a Universally Unique IDentifier (UUID), a SubSystem IDentification (SSID), and an Internet protocol (IP) address) for connection with the electronic device 930.

According to an embodiment of the present invention, the capability exchange protocol 953 is a protocol for exchanging information related to a service function which can be supported by at least one of the electronic device 910 and the electronic device 930. For example, the electronic device 910 and the electronic device 930 may mutually exchange information related to currently provided service functions through the capability exchange protocol 953. The exchangeable information may include identification information indicating a certain service among a plurality of services which can be supported by the electronic device 910 or the electronic device 930. For example, the electronic device 910 may receive identification information of a certain service, provided by the electronic device 930, from the electronic device 930 through the capability exchange protocol 953. In this case, the electronic device 910 determines whether the electronic device 910 may support the certain service, based on the received identification information.

According to an embodiment of the present invention, the network protocol 955 is a protocol for controlling flow of data transmitted/received to provide a service between the electronic device 910 and the electronic device 930 connected to communicate with each other. For example, at least one of the electronic device 910 and the electronic device 930 may control an error or data quality using the network protocol 955. Additionally or alternatively, the network protocol 955 determines a transmission format of data transmitted/received between the electronic device 910 and the electronic device 930. In addition, using the network protocol 955, at least one of the electronic device 910 and the electronic device 930 may perform session management (e.g., session connection or session termination) for data exchange between the electronic devices 910 and 930.

According to an embodiment of the present invention, the application protocol 957 is a protocol for providing a procedure or information for exchanging data related to a service provided to an external electronic device. For example, the electronic device 910 (e.g., the electronic device 101) may provide a service to the electronic device 930 (e.g., the electronic device 104 or the server 106) through the application protocol 957.

According to an embodiment of the present invention, the communication protocol 900 may include a standard communication protocol, a communication protocol designated by an individual or organization (e.g., a communication protocol self-designated by a communication device maker a network supplier) or a combination thereof.

According to an embodiment of the present invention, at least some of the devices (for example, modules or functions thereof) or the method (for example, steps) according to the present invention may be implemented by a command stored in a non-transitory computer-readable storage medium in a programming module form. When the command is executed by one or more processors (for example, the processor 210), the one or more processors executes a function corresponding to the command. The non-transitory computer-readable storage medium may be, for example, the memory 230. At least a part of the programming module may be implemented (for example, executed) by, for example, the processor 210. At least some of the programming modules may include, for example, a module, a program, a routine, a set of instructions or a process for performing one or more functions.

The non-transitory computer readable recording medium may include magnetic media such as a hard disk, a floppy disk, and a magnetic tape, optical media such as a Compact Disk Read Only Memory (CD-ROM) and a Digital Versatile Disc (DVD), magneto-optical media such as a floptical disk, and hardware devices configured to store and execute program commands, such as a Read Only Memory (ROM), a Random Access Memory (RAM), and a flash memory. In addition, the program instructions may include high level language code, which can be executed in a computer by using an interpreter, as well as machine codes generated by a compiler. The aforementioned hardware device may be configured to operate as one or more software modules in order to perform the operation of the present invention, and vice versa.

The programming module according to the present invention may include one or more of the aforementioned components or may further include other additional components, or some of the aforementioned components may be omitted. Operations executed by a module, a programming module, or other component elements according to various embodiments of the present invention may be executed sequentially, in parallel, repeatedly, or in a heuristic manner. Further, some operations may be executed according to another order or may be omitted, or other operations may be added.

The above-described embodiments of the present invention can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, the microprocessor controller or the programmable hardware include memory components, e.g., RAM, ROM, flash memory, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the accompanying drawings may be implemented in hardware, software or a combination of both and may be performed in whole or in part within the programmed instructions of a computer. In addition, an artisan understands and appreciates that a "processor" or "microprocessor" may include hardware in the present invention. Meanwhile, the embodiments in the present disclosure and the accompanying drawings are merely presented to easily describe the technical content of the present invention and facilitate understanding of the present invention and are not intended to limit the scope of the present invention. Therefore, all changes or modifications derived from the technical idea of the present invention as well as the embodiments described herein should be interpreted to belong to the scope of the present invention, as defined by the appended claims and their equivalents.

## Claims

**1.** An electronic device, comprising;
a signal acquisition module configured to transmit a signal toward an object and receive an echo signal obtained by transformation of the signal through a collision with one surface of the object;
a feature extraction module configured to extract a signal descriptor from the echo signal and analyze the extracted signal descriptor;
a conversion module configured to convert the signal descriptor into an audio descriptor; and
a synthesis module configured to convert the audio descriptor into an audio signal in a determined frequency band and output the converted audio signal.

**2.** The electronic device of claim 1, further comprising:

a compensation module configured to detect information on motion of the object and the electronic device, generate a compensation signal based on the detected information, and transfer the generated compensation signal to the conversion module.

**3.** The electronic device of claim 2, wherein the conversion module is further configured to convert the signal descriptor into the audio descriptor based on the signal descriptor and the compensation signal.

**4.** The electronic device of claim 2, wherein the signal acquisition module comprises an extended signal acquisition module configured to acquire audio information and video information of the object.

**5.** The electronic device of claim 4, further comprising:

an adaptation module configured to receive the audio information and the video information of the object from the extended signal acquisition module, determine audio data of the object among pre-stored audio data based on the received audio information and video information, and adjust at least one of a frequency, pitch, and timbre of the received audio information based on the determined audio data of the object,
wherein the conversion module is further configured to convert the signal descriptor into the audio descriptor based on the signal descriptor, the compensation signal, and adjusted at least one of the frequency, the pitch, and the timbre of the received audio information of the object received from the adaptation module.

**6.** The electronic device of claim 5, wherein the adaptation module is further configured to receive the video information of the object from the extended signal acquisition module and determine a fundamental frequency band of the object based on the received video information.

**7.** The electronic device of claim 1, wherein the synthesis module is further configured to output the audio signal to which pre-stored data is added when the amount of audio data corresponding to the audio signal is less than or equal to that of a predetermined threshold audio data.

**8.** The electronic device of claim 4, wherein the object is determined as the electronic device detects a selection input event for the video information received from the extended signal acquisition module.

**9.** An audio recognition method for an electronic device, comprising:

transmitting a signal toward an object;
receiving an echo signal obtained by transformation of the signal through a collision with one surface of the object;
extracting a signal descriptor from the echo signal and analyzing the extracted signal descriptor;

converting the signal descriptor into an audio descriptor; and
converting the audio descriptor into an audio signal in a determined frequency band and outputting the converted audio signal.

**10.** The audio recognition method of claim 9, further comprising:

detecting information on motion of the object and the electronic device, generating a compensation signal based on the detected information, and transferring the generated compensation signal to the conversion module.

**11.** The audio recognition method of claim 10, wherein converting the signal descriptor into the audio descriptor comprises:

converting the signal descriptor into the audio descriptor based on the signal descriptor and the compensation signal.

**12.** The audio recognition method of claim 10, further comprising:

acquiring audio information and video information of the object.

**13.** The audio recognition method of claim 12, further comprising:

receiving the acquired audio information and video information of the object, determining audio data of the object among pre-stored audio data based on the received audio information and video information, and adjusting at least one of a frequency, pitch, and timbre of the received audio information based on the determined audio data of the object,
wherein the converting of the signal descriptor into the audio descriptor comprises converting the signal descriptor into the audio descriptor based on the signal descriptor, the compensation signal, and the adjusted at least one of the frequency, the pitch, and the timbre of the received audio information of the object

**14.** The audio recognition method of claim 12, further comprising:

receiving the acquired video information of the object and determining a fundamental frequency band of the object based on the received video information.

**15.** The audio recognition method of claim 9, wherein outputting the audio signal comprises:

outputting the converted audio signal to which pre-stored data is added when the amount of audio data corresponding to the audio signal is less than or equal to that of a predetermined threshold audio data.

FIG. 1

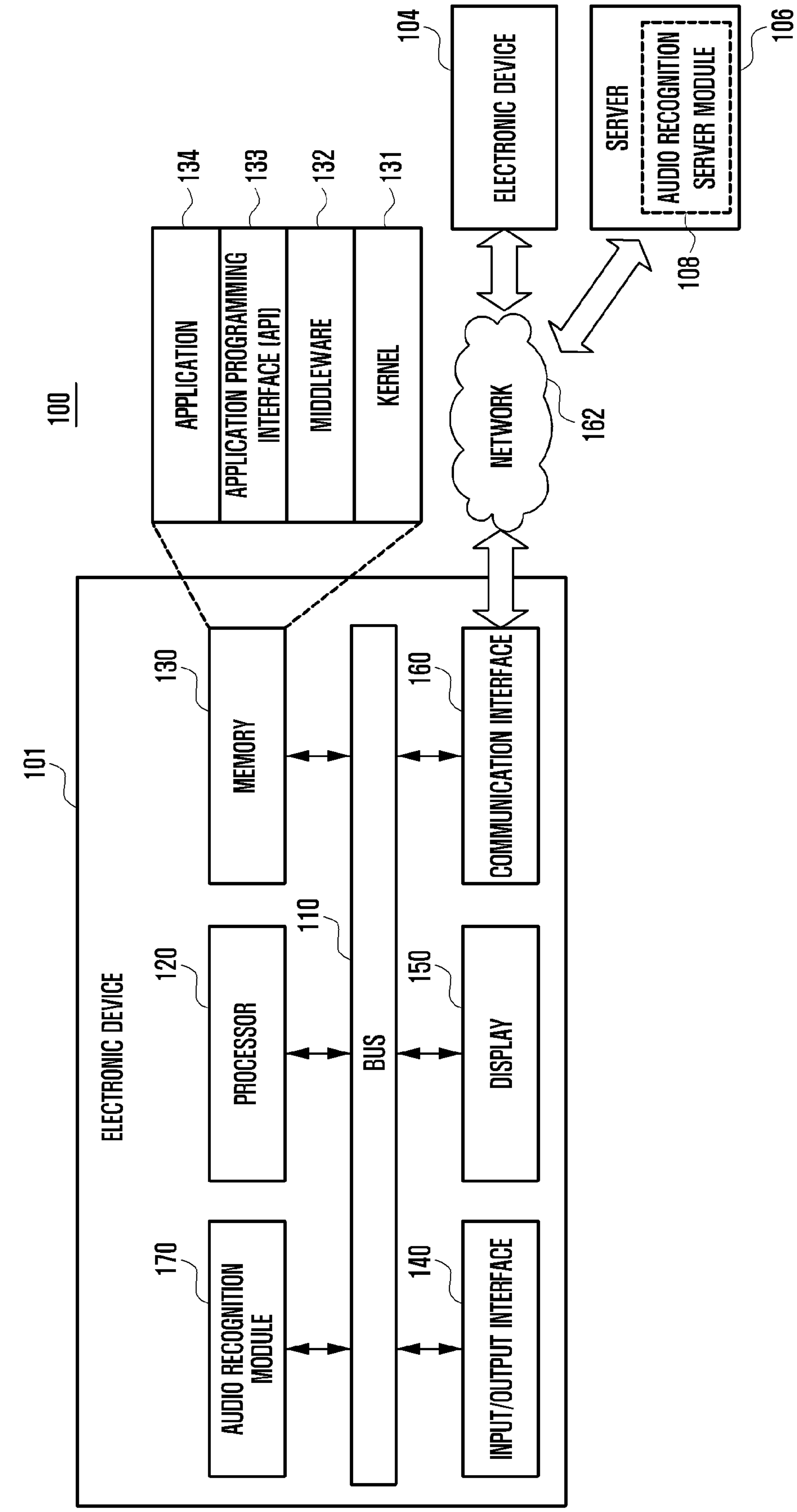
100
101
ELECTRONIC DEVICE
170
AUDIO RECOGNITION MODULE
120
PROCESSOR
130
MEMORY
110
BUS
140
INPUT/OUTPUT INTERFACE
150
DISPLAY
160
COMMUNICATION INTERFACE
134
APPLICATION
133
APPLICATION PROGRAMMING INTERFACE (API)
132
MIDDLEWARE
131
KERNEL
NETWORK
162
104
ELECTRONIC DEVICE
106
SERVER
AUDIO RECOGNITION SERVER MODULE
108

FIG. 2

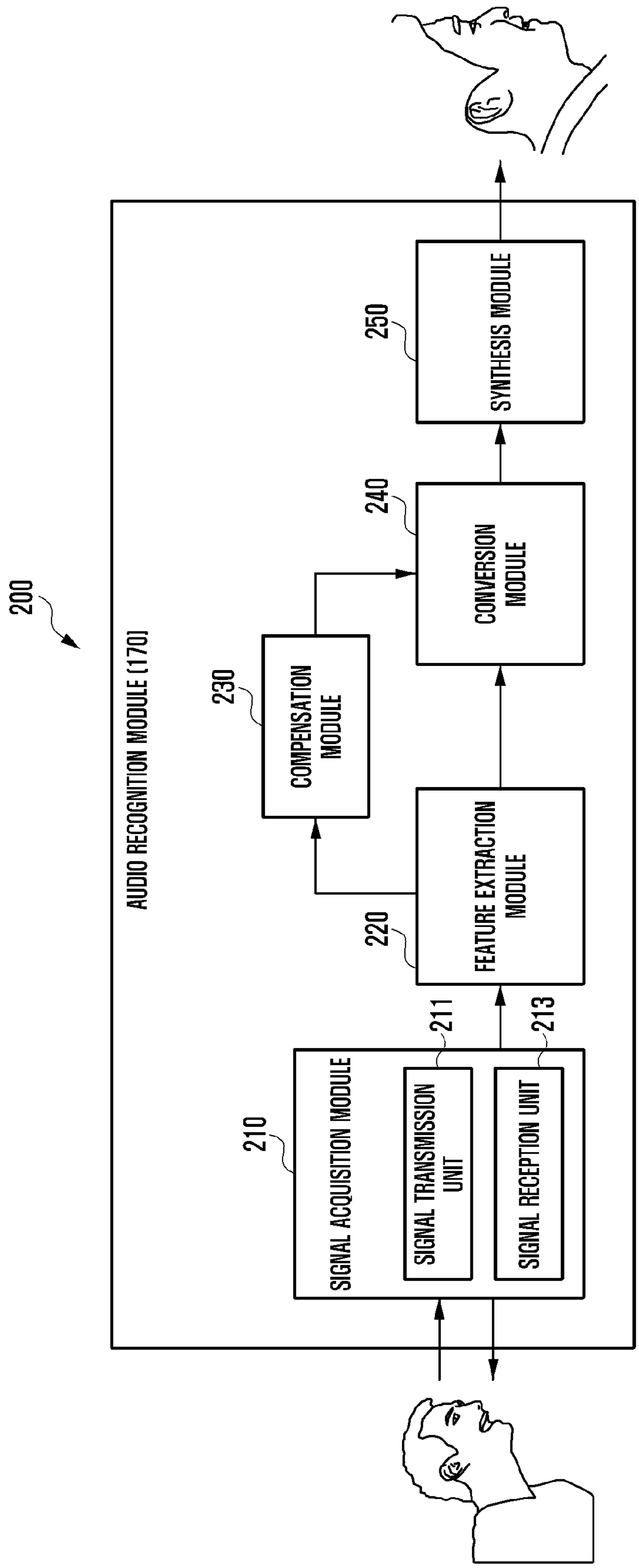
200
AUDIO RECOGNITION MODULE (170)
210
SIGNAL ACQUISITION MODULE
211
SIGNAL TRANSMISSION UNIT
213
SIGNAL RECEPTION UNIT
220
FEATURE EXTRACTION MODULE
230
COMPENSATION MODULE
240
CONVERSION MODULE
250
SYNTHESIS MODULE

FIG. 3

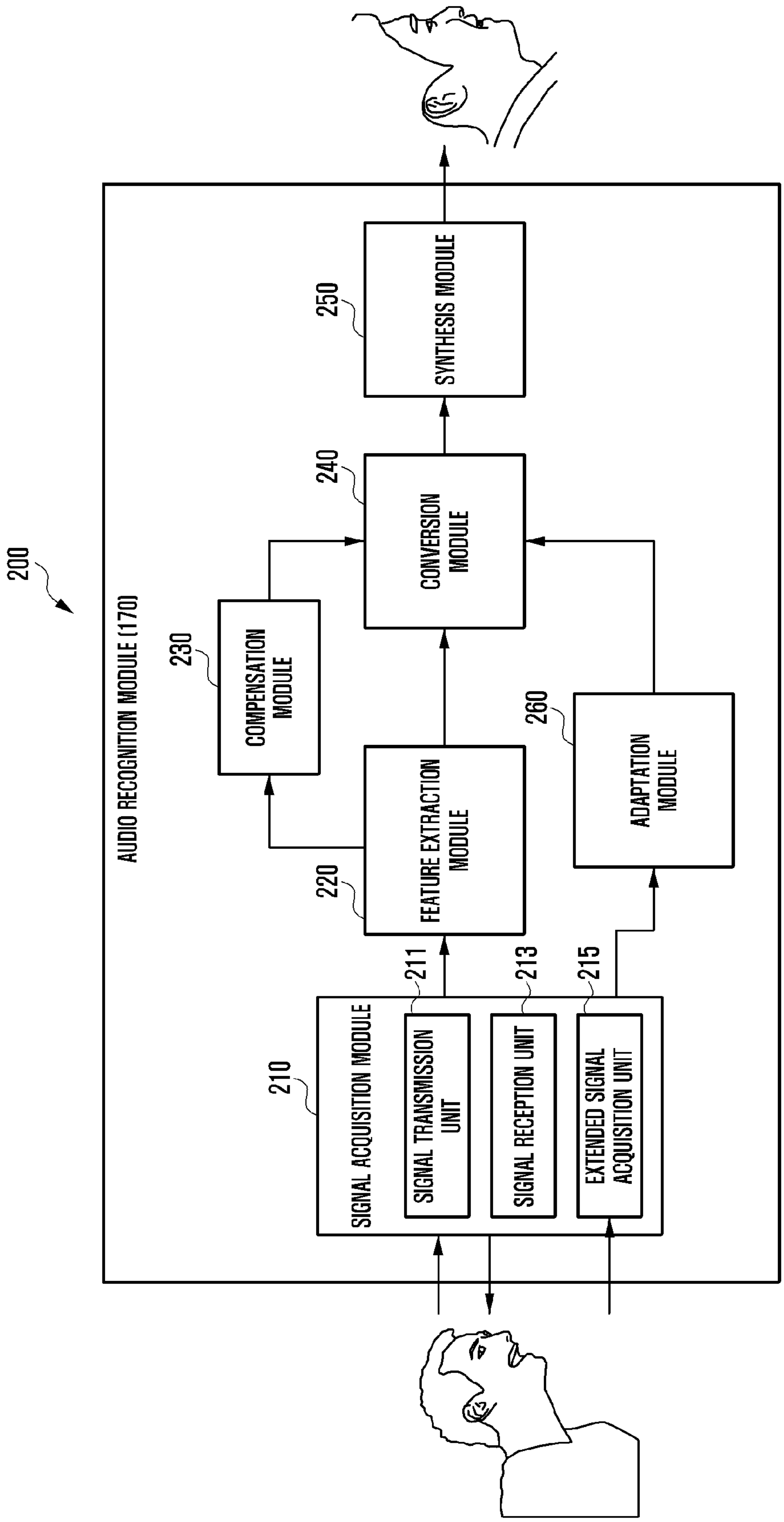
200
AUDIO RECOGNITION MODULE (170)
210
SIGNAL ACQUISITION MODULE
211
SIGNAL TRANSMISSION UNIT
213
SIGNAL RECEPTION UNIT
215
EXTENDED SIGNAL ACQUISITION UNIT
220
FEATURE EXTRACTION MODULE
230
COMPENSATION MODULE
240
CONVERSION MODULE
250
SYNTHESIS MODULE
260
ADAPTATION MODULE

FIG. 4

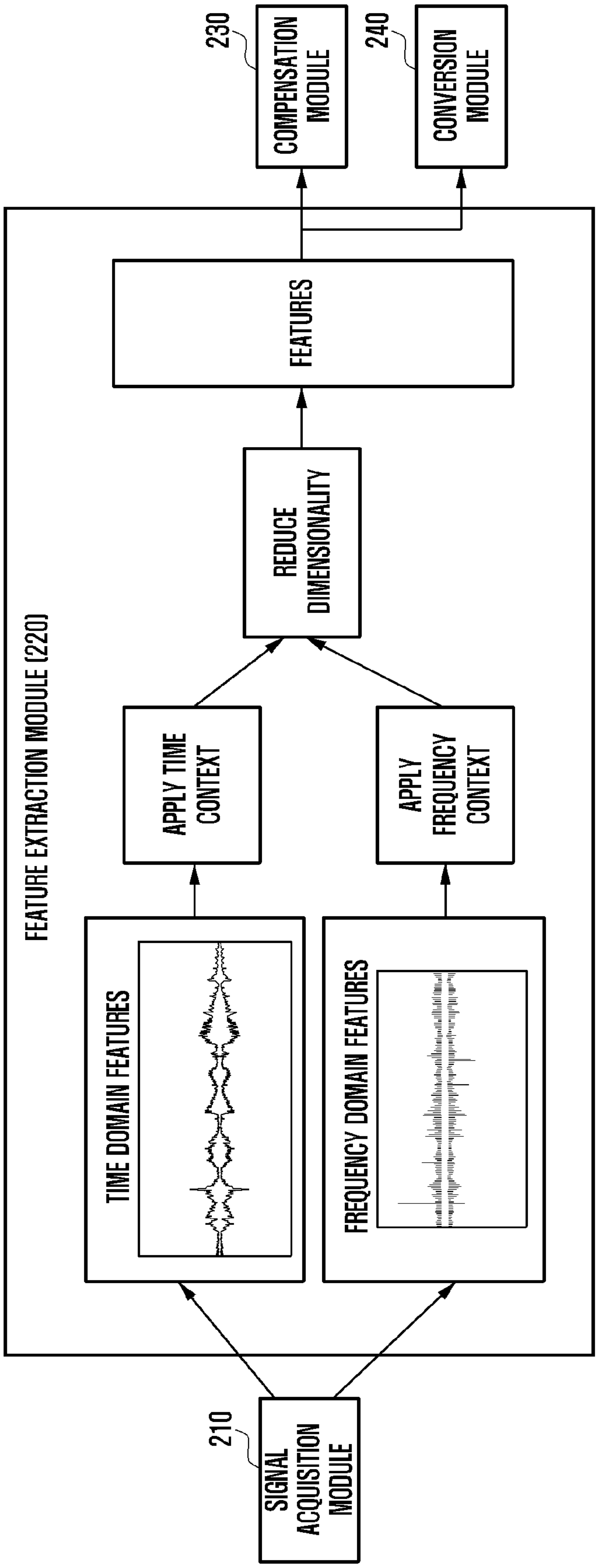
210
SIGNAL ACQUISITION MODULE
FEATURE EXTRACTION MODULE (220)
TIME DOMAIN FEATURES
FREQUENCY DOMAIN FEATURES
APPLY TIME CONTEXT
APPLY FREQUENCY CONTEXT
REDUCE DIMENSIONALITY
FEATURES
230
COMPENSATION MODULE
240
CONVERSION MODULE

FIG. 5

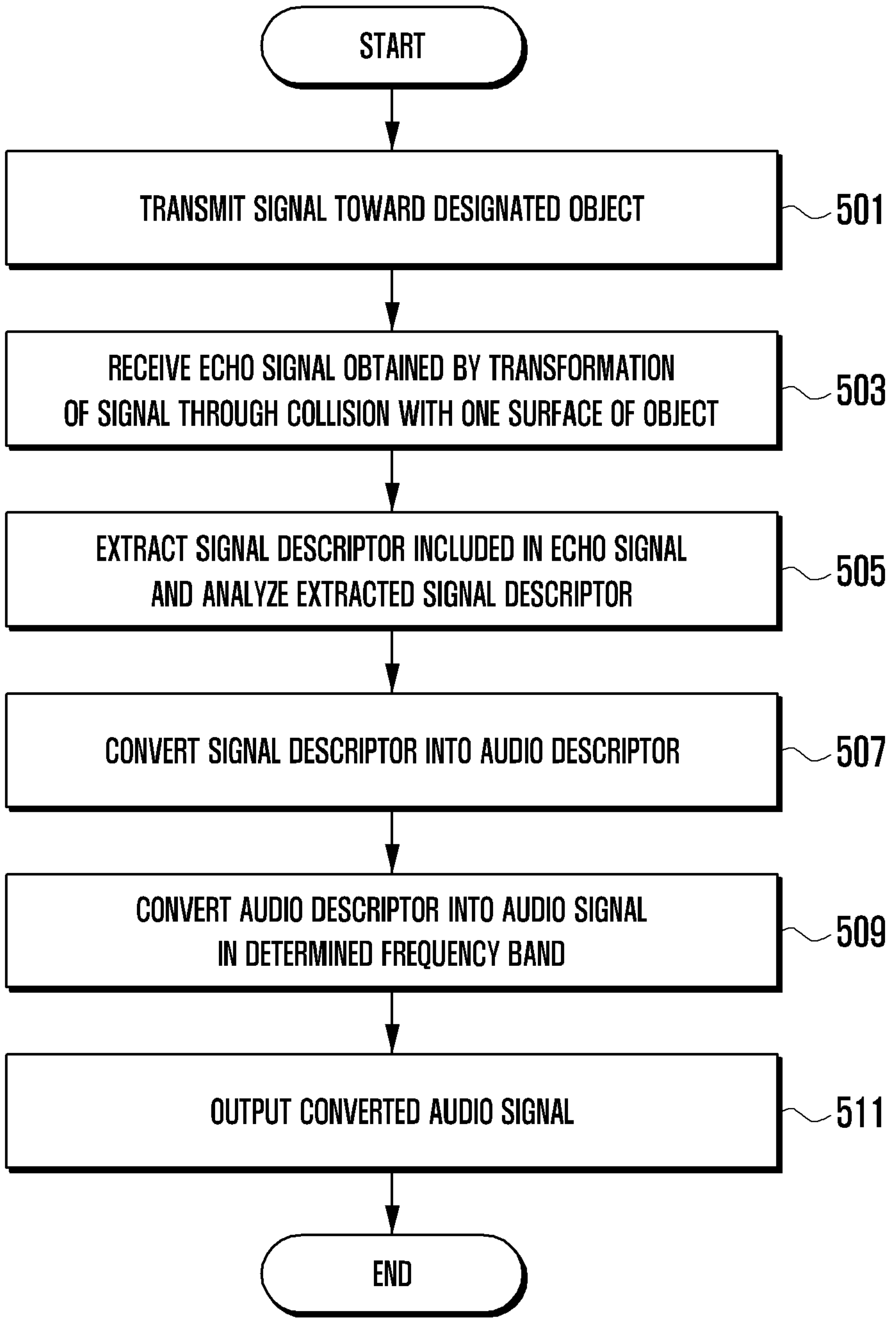
START
TRANSMIT SIGNAL TOWARD DESIGNATED OBJECT
501
RECEIVE ECHO SIGNAL OBTAINED BY TRANSFORMATION OF SIGNAL THROUGH COLLISION WITH ONE SURFACE OF OBJECT
503
EXTRACT SIGNAL DESCRIPTOR INCLUDED IN ECHO SIGNAL AND ANALYZE EXTRACTED SIGNAL DESCRIPTOR
505
CONVERT SIGNAL DESCRIPTOR INTO AUDIO DESCRIPTOR
507
CONVERT AUDIO DESCRIPTOR INTO AUDIO SIGNAL IN DETERMINED FREQUENCY BAND
509
OUTPUT CONVERTED AUDIO SIGNAL
511
END

FIG. 6

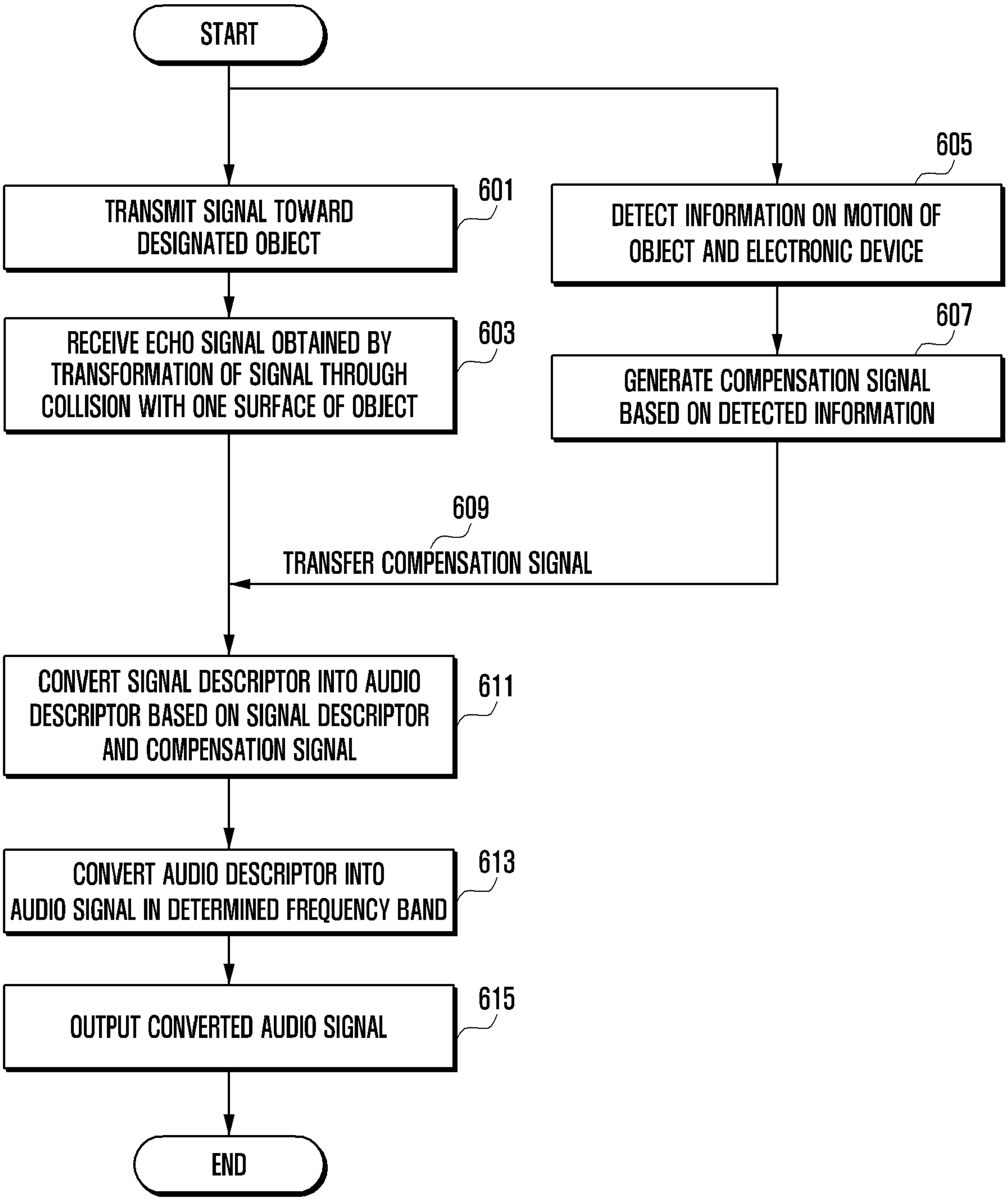
START
TRANSMIT SIGNAL TOWARD DESIGNATED OBJECT
601
RECEIVE ECHO SIGNAL OBTAINED BY TRANSFORMATION OF SIGNAL THROUGH COLLISION WITH ONE SURFACE OF OBJECT
603
DETECT INFORMATION ON MOTION OF OBJECT AND ELECTRONIC DEVICE
605
GENERATE COMPENSATION SIGNAL BASED ON DETECTED INFORMATION
607
TRANSFER COMPENSATION SIGNAL
609
CONVERT SIGNAL DESCRIPTOR INTO AUDIO DESCRIPTOR BASED ON SIGNAL DESCRIPTOR AND COMPENSATION SIGNAL
611
CONVERT AUDIO DESCRIPTOR INTO AUDIO SIGNAL IN DETERMINED FREQUENCY BAND
613
OUTPUT CONVERTED AUDIO SIGNAL
615
END

FIG. 7

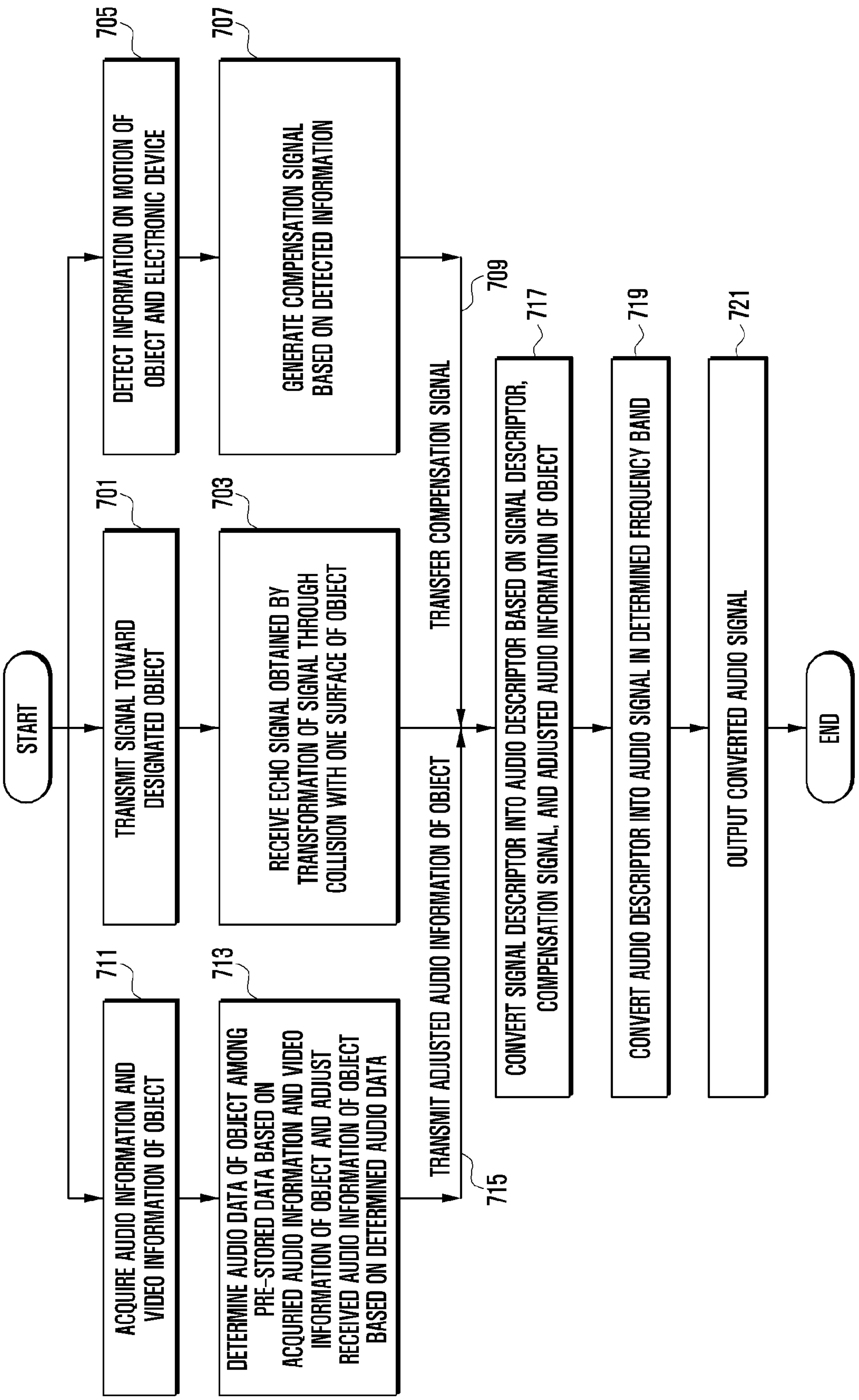
START
ACQUIRE AUDIO INFORMATION AND VIDEO INFORMATION OF OBJECT
711
TRANSMIT SIGNAL TOWARD DESIGNATED OBJECT
701
DETECT INFORMATION ON MOTION OF OBJECT AND ELECTRONIC DEVICE
705
DETERMINE AUDIO DATA OF OBJECT AMONG PRE-STORED DATA BASED ON ACQURIED AUDIO INFORMATION AND VIDEO INFORMATION OF OBJECT AND ADJUST RECEIVED AUDIO INFORMATION OF OBJECT BASED ON DETERMINED AUDIO DATA
713
RECEIVE ECHO SIGNAL OBTAINED BY TRANSFORMATION OF SIGNAL THROUGH COLLISION WITH ONE SURFACE OF OBJECT
703
GENERATE COMPENSATION SIGNAL BASED ON DETECTED INFORMATION
707
TRANSMIT ADJUSTED AUDIO INFORMATION OF OBJECT
715
TRANSFER COMPENSATION SIGNAL
709
CONVERT SIGNAL DESCRIPTOR INTO AUDIO DESCRIPTOR BASED ON SIGNAL DESCRIPTOR, COMPENSATION SIGNAL, AND ADJUSTED AUDIO INFORMATION OF OBJECT
717
CONVERT AUDIO DESCRIPTOR INTO AUDIO SIGNAL IN DETERMINED FREQUENCY BAND
719
OUTPUT CONVERTED AUDIO SIGNAL
721
END

FIG. 8

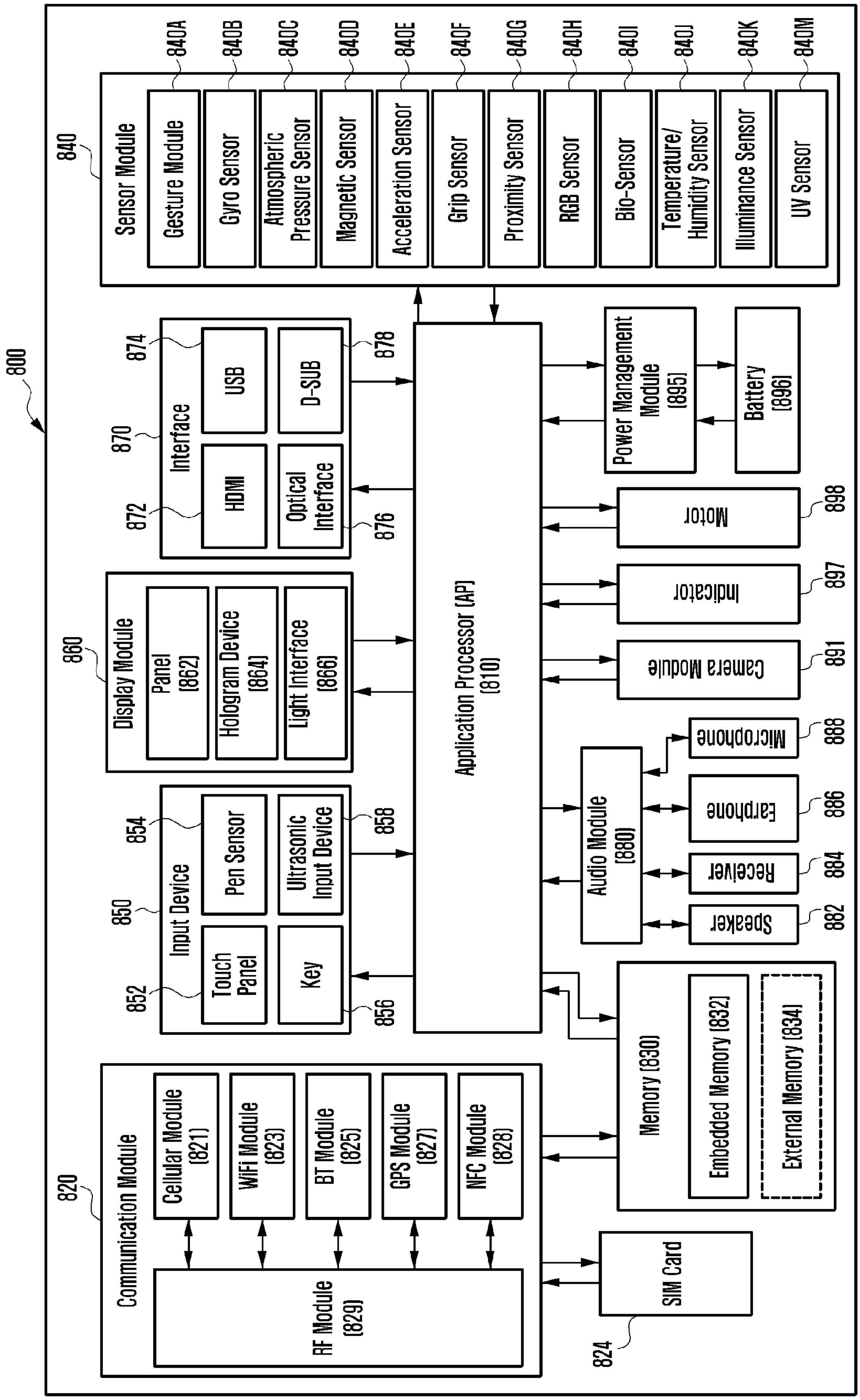
800
840
Sensor Module
Gesture Module
840A
Gyro Sensor
840B
Atmospheric Pressure Sensor
840C
Magnetic Sensor
840D
Acceleration Sensor
840E
Grip Sensor
840F
Proximity Sensor
840G
RGB Sensor
840H
Bio-Sensor
840I
Temperature/ Humidity Sensor
840J
Illuminance Sensor
840K
UV Sensor
840M
870
Interface
872
HDMI
874
USB
876
Optical Interface
878
D-SUB
860
Display Module
Panel [862]
Hologram Device [864]
Light Interface [866]
850
Input Device
852
Touch Panel
854
Pen Sensor
856
Key
858
Ultrasonic Input Device
Application Processor (AP) [810]
Power Management Module [895]
Battery [896]
Motor
898
Indicator
897
Camera Module
891
Audio Module [880]
Microphone
888
Earphone
886
Receiver
884
Speaker
882
Memory [830]
Embedded Memory [832]
External Memory [834]
820
Communication Module
Cellular Module [821]
WiFi Module [823]
BT Module [825]
GPS Module [827]
NFC Module [828]
RF Module [829]
SIM Card
824

FIG. 9

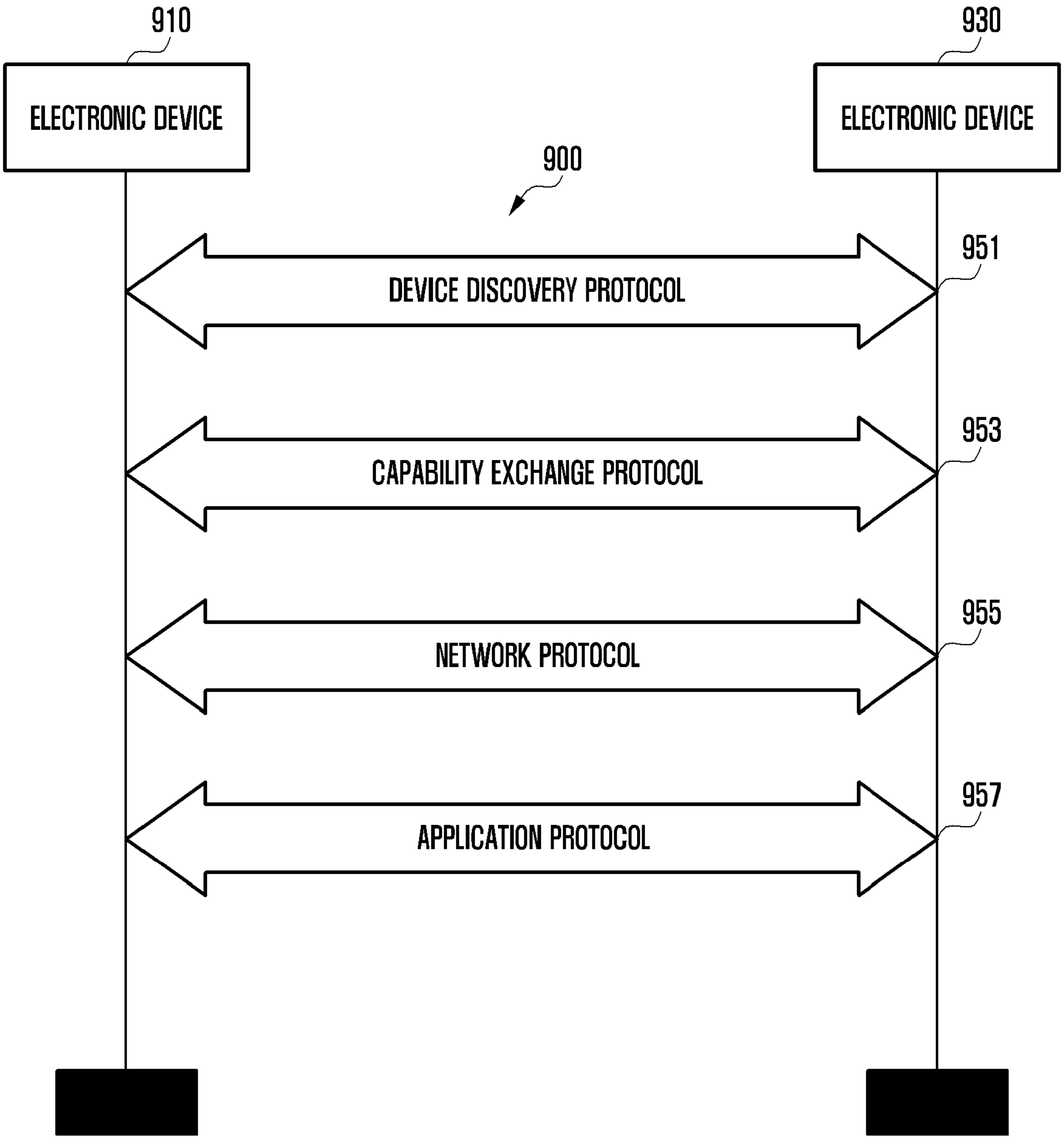
910
ELECTRONIC DEVICE
930
ELECTRONIC DEVICE
900
951
DEVICE DISCOVERY PROTOCOL
953
CAPABILITY EXCHANGE PROTOCOL
955
NETWORK PROTOCOL
957
APPLICATION PROTOCOL

Europäisches Patentamt
European Patent Office
Office européen des brevets

# EUROPEAN SEARCH REPORT

Application Number
EP 15 16 7396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUEBER T ET AL: "Development of a silent speech interface driven by ultrasound and optical images of the tongue and lips", SPEECH COMMUNICATION, ELSEVIER SCIENCE PUBLISHERS, AMSTERDAM, NL, vol. 52, no. 4, 1 April 2010 (2010-04-01), pages 288-300, XP026917072, ISSN: 0167-6393, DOI: 10.1016/J.SPECOM.2009.11.004 [retrieved on 2009-11-26] * the whole document * | 1-15 | INV. G10L15/24 |
| X | US 2010/131268 A1 (MOELLER LOTHAR BENEDIKT [US]) 27 May 2010 (2010-05-27) * paragraphs [0006], [0017], [0031], [0042] - [0044], [0059], [0061]; claims 1,9,13,16,19; figures 3b,3c,5,6a * | 1-15 | |
| X | US 2012/136660 A1 (HARMAN DALE D [US] ET AL) 31 May 2012 (2012-05-31) * the whole document * | 1-15 | TECHNICAL FIELDS SEARCHED (IPC) |
| X<br>A | US 2012/059657 A1 (WILLEY JEFFERSON M [US] ET AL) 8 March 2012 (2012-03-08) * claims 1,10 * | 1-3,9-11<br>4-8, 12-15 | G10L<br>G06K |
| X | YING TIAN ET AL: "Smart radar sensor for speech detection and enhancement", SENSORS AND ACTUATORS A: PHYSICAL, vol. 191, 1 March 2013 (2013-03-01), pages 99-104, XP055124819, ISSN: 0924-4247, DOI: 10.1016/j.sna.2012.12.002 * the whole document * | 1,9 | |

The present search report has been drawn up for all claims

1

| Place of search | Date of completion of the search | Examiner |
|---|---|---|
| The Hague | 14 September 2015 | Deltorn, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 16 7396

This annex lists the patent family members relating to the patent documents cited in the above-mentioned European search report. The members are as contained in the European Patent Office EDP file on
The European Patent Office is in no way liable for these particulars which are merely given for the purpose of information.

14-09-2015

| Patent document cited in search report | Publication date | Patent family member(s) | Publication date |
|---|---|---|---|
| US 2010131268 A1 | 27-05-2010 | EP 2370799 A1 | 05-10-2011 |
| | | JP 2012510088 A | 26-04-2012 |
| | | US 2010131268 A1 | 27-05-2010 |
| | | WO 2010062806 A1 | 03-06-2010 |
| US 2012136660 A1 | 31-05-2012 | TW 201243824 A | 01-11-2012 |
| | | US 2012136660 A1 | 31-05-2012 |
| | | WO 2012074652 A1 | 07-06-2012 |
| US 2012059657 A1 | 08-03-2012 | NONE | |

EPO FORM P0459

For more details about this annex : see Official Journal of the European Patent Office, No. 12/82